# EUROPÄISCHE PATENTSCHRIFT

(11) **EP 3 165 859 B1**
(45) Veröffentlichungstag und Bekanntmachung des Hinweises auf die Patenterteilung: **15.01.2020**
(21) Anmeldenummer: 16196000.0
(22) Anmeldetag: 27.10.2016
(51) Int. Cl.: F25D 31/00, A23L 3/3418, B01D 5/00, F28B 9/02

(54) **VAKUUMKÜHLVORRICHTUNG UND VERFAHREN ZUR VAKUUMKÜHLUNG VON LEBENSMITTELN**
VACUUM COOLING DEVICE AND METHOD FOR THE VACUUM COOLING OF FOODSTUFF
DISPOSITIF DE REFROIDISSEMENT À VIDE ET PROCÉDÉ POUR LE REFROIDISSEMENT À VIDE DES ALIMENTS

(30) Priorität: 04.11.2015 CH 16002015
(43) Veröffentlichungstag der Anmeldung: 10.05.2017
(73) Patentinhaber: Giger, Ulrich, 8608 Bubikon (CH); Bäbler, Florian, 8753 Mollis (CH); Bäbler, Kaspar, 8753 Mollis (CH)
(72) Erfinder: Giger, Ulrich, 8608 Bubikon (CH); Bäbler, Florian, 8753 Mollis (CH); Bäbler, Kaspar, 8753 Mollis (CH)
(74) Vertreter: Herrmann, Johanna

(56) Entgegenhaltungen:
- EP-A1- 2 832 241
- WO-A1-2007/094141
- DE-A1-102011 007 543

## Beschreibung

Die Erfindung betrifft eine Vakuumkühlvorrichtung sowie ein Verfahren zur Vakuumkühlung von Lebensmitteln, insbesondere Backwaren. Insbesondere betrifft die Erfindung eine Vakuumkühlvorrichtung sowie ein Verfahren zur Kondensation von Dampf aus einem dampfbeladenen Abluftstrom der Vakuumkammer. Eine Vakuumkühlvorrichtung zum Kühlen von Lebensmitteln, insbesondere Backwaren, beispielsweise frisch gebackenem Brotprodukten, unter einem negativen Druck umfasst eine Vakuumkammer, die zur Aufnahme des Lebensmittels für dessen Kühlung ausgebildet ist; eine Vakuumquelle, wie beispielsweise eine Vakuumpumpe, die mit der Vakuumkammer zur Erzeugung eines Unterdrucks in der Vakuumkammer verbunden ist, sowie einen Dampfkondensator.

Eine Vakuumkammer zur Lagerung von Nahrungsmitteln oder Holz ist beispielsweise aus der GB259626A bekannt. In dieser Vakuumkammer können die Lebensmittel auch haltbar gemacht werden. Hierzu ist eine Zufuhrleitung für ein Inertgas, Ozon oder anderes aseptisches Gas zur Abtötung von Keimen in den Lebensmitteln in die Vakuumkammer vorgesehen. In den Behälter führen zwei Vakuumleitungen, die mit einer nicht dargestellten Vakuumpumpe in Verbindung stehen und durch je ein Absperrventil absperrbar sind. An die Vakuumleitungen ist im Vakuumbehälter je ein stehendes Kondensatorelement angeschlossen. Die beiden Kondensatorelemente dienen der Aufnahme von Feuchtigkeit, die bei Erwärmung des Lebensmittels durch einen mit Dampf beaufschlagtes Rohrbündel eines unterhalb der Lebensmittel angeordneten Heizelements entsteht. Die Feuchtigkeit kondensiert an den Wänden des entsprechenden Kondensatorelements und wird von der Vakuumpumpe über die Vakuumleitungen abgesaugt. Durch die Absaugung des Kondensats erfolgt eine Trocknung des Lebensmittels im Vakuumbehälter. Diese Vorrichtung eignet sich nicht für Lebensmittel, welche bei ihrer Verarbeitung einen gewissen Feuchtigkeitsgrad aufweisen müssen, wie beispielsweise heisses Backgut, weil der Dampf durch die Trocknungswirkung nicht mehr zur Aufrechterhaltung des Feuchtigkeitsgrads zur Verfügung stehen kann.

Heisse und feuchte Lebensmittel können durch Evakuieren in einer Vakuumkammer sehr effizient abgekühlt werden, das heisst es ist nur eine kurze Abkühlungsdauer erforderlich. Allerdings fallen während des Evakuiervorgangs sehr grosse Volumina an Dampf an, welche ein Vielfaches des Kammervolumens betragen können. In einer Vakuumkammer, welche zwischen 4 und 6.6 m³ Kammervolumen aufweist, kann das Dampfvolumen beispielsweise bis 100-mal des Kammervolumens betragen. Die Leistung der Vakuumpumpe wird durch das anfallende Dampfvolumen bestimmt. Das heisst die Vakuumpumpe muss derart ausgelegt werden, dass die gesamte Dampfmenge die Vakuumkammer über die Vakuumpumpe verlässt. Ein Beispiel für eine Vakuumpumpe 1 für eine Vakuumkühlkammer 2 ist in der JP11-211314 gezeigt. Die Vakuumpumpe 1 ist nach dem Prinzip einer Venturipumpe ausgelegt, welche die Luft aus der Vakuumkühlkammer mittels des Wasserdrucks des durch die Venturidüse der Venturipumpe strömenden Wassers absaugt. Nach diesem in der JP11-211314 gezeigten Prinzip wird also die Luft aus der Vakuumkühlkammer in einem Wasserstrom aufgenommen und abtransportiert. Bei diesem Verfahren erfolgt keine Dampfkondensation. Die Leistung der Wasserzirkulationspumpe 8, welche zum Betrieb der Venturipumpe 1 benötigt wird, muss für den gesamten, Dampf enthaltenden Luftstrom ausgelegt werden, daher entsprechend gross dimensioniert sein. Um die Dampfmenge zu verringern, welche die Vakuumpumpe verarbeiten muss, werden in der US 2 696 775 in die Vakuumleitungen Dampfkondensatoren eingebaut. Gemäss US 2 696 775 wird eine Vakuumkammer zur Kühlung von Lebensmitteln mit einem Backofen kombiniert. Nach Abschluss des Backvorgangs wird das Backgut evakuiert. Hierzu wird der Dampf über eine Leitung abgesaugt, in einen Kondensator eingeleitet und dann der Vakuumpumpe zugeführt. Der Kondensator ist zwischen Vakuumkammer und Vakuumpumpe angeordnet und nicht am Boden der Vakuumkammer, sodass der Dampf nicht mit dem Wasserbad in Berührung kommt. Nachteilig an diesem Konzept ist, dass die Vakuumpumpe auch den Dampfstrom absaugen muss.
Ein Beispiel für einen einer Venturipumpe vorgeschalteten Wärmetauscher, in welchem eine Dampfkondensation erfolgt, ist in der JP2001-221546 gezeigt.
Diese Dampfkondensation im Wärmetauscher verhindert zwar, dass ein Teil des Dampfes die nachgeschaltete Vakuumpumpe erreicht, allerdings muss die Vakuumpumpe den gesamten nicht kondensierten Dampfvolumenstrom aus dem Vakuumbehälter umwälzen.

Die WO2012 082060 beschreibt eine Vakuumkühlanlage für Backgut, die mit Niederdruckdampf befeuchtet wird. Die Vorrichtung umfasst einen Dampferzeuger zur Erzeugung von Dampf unter einem Unterdruck. Der Dampf ist im Wesentlichen frei von Luft, wobei der Dampferzeuger in Verbindung mit der Vakuumkammer angeordnet ist, so dass der erzeugte Dampf in die Kammer ohne gleichzeitige Luftzufuhr eingeführt wird.

Im Stand der Technik wird daher der gesamte Wasserdampf oder zumindest ein grosser Teil des Wasserdampfs mit der Vakuumpumpe in die Umgebung geleitet. Dementsprechend erhöht sich der Durchsatz durch die Vakuumpumpe um bis zu dem hundertfachen Wert des Luftdurchsatzes. Ein Teil des Wasserdampfs kann gezielt dafür genutzt werden, den Feuchtigkeitsgehalt der Backwaren zu erhöhen. Diese Lösung ist mit allerdings einem hohen Energieverbrauch verbunden. Dementsprechend muss eine Vakuumpumpe mit hoher Leistung eingesetzt werden. Die Pumpenleistung beträgt üblicherweise um die 45 kW. Die Verwendung einer derart leistungsstarken Vakuumpumpe hat neben dem hohen Energieverbrauch eine ganze Reihe von Nachteilen im Betrieb.

Zumeist werden ölgeschmierte Vakuumpumpen vorgesehen, um das Dampfvolumen abzupumpen, weil sie einen hohen elektrischen Anschlusswert aufweisen. Während des Betriebs der Vakuumpumpe kommt der abzusaugende Dampf mit dem Schmieröl der Vakuumpumpe in Kontakt. Wenn der Dampf kondensiert, bevor er in die Vakuumpumpe gelangt oder im Innenraum der Vakuumpumpe kondensiert, kommt es zur Bildung eines Wasser-Öl-Gemisches, das eine stabile Emulsion ausbildet. Das Schmieröl muss deutlich über den Siedepunkt von Wasser erhitzt werden, um eine Emulsionsbildung zu verhindern. Das Schmieröl hat einen Siedepunkt von über 100°C. Der Siedepunkt des Wassers liegt darunter. Die Vakuumpumpe sollte daher über dem Siedepunkt des Wassers betrieben werden. Hierzu sollte die gesamte Vakuumpumpe, die mit dem Dampf in Berührung kommt, eine Temperatur aufweisen, die über dem Siedepunkt des Wassers liegt, das heisst das Wasser verdampft unter atmosphärischen Bedingungen. Hierzu ist es erforderlich, dass die Vakuumpumpe läuft, auch wenn sie gerade nicht für die Vakuumbildung benötigt wird, damit die notwendige Wärme erzeugt wird. Eine Ölemulsion kann entstehen, solange sich Dampf in der Vakuumkammer befindet, auch wenn die Vakuumkammer nicht mehr zur Durchführung einer Vakuumkühlung verwendet wird. Daher sollte die Vakuumpumpe mindestens eine Stunde lang weiterlaufen, nachdem der letzte Vakuumkühlvorgang abgeschlossen ist. Die Vakuumpumpe sollte auch mindestens eine Stunde vorzugsweise mindestens 90 Minuten, besonders bevorzugt mindestens zwei Stunden früher in Betrieb genommen werden, damit sie die notwendige Betriebstemperatur erreicht.

Der Vakuumpumpe kann ein Abscheider nachgeschaltet sein, um den Wasserdampf zu kondensieren. Wenn in der Vakuumpumpe bereits Wasserdampf kondensiert, nimmt dieser Wasserdampf Schmieröl auf. Daher befinden sich im Wasserdampfkondensat klebrige Schmierölrückstände, die in den Wasserablauf gelangen können. Da die Ölemulsion, die durch den kondensierenden Wasserdampf in der Vakuumpumpe gebildet wird, stabil ist, kann sie unter Umständen nicht durch einen konventionellen Ölfilter abgeschieden werden. Die zum Einsatz kommenden Abscheider sind voluminös, aufwändig zu entwässern und zu reinigen.

Die Verwendung einer leistungsstarken Vakuumpumpe kann auch dazu führen, dass Verunreinigungen, wie Schmutzpartikel, Lebensmittelfette und andere Backrückstände aus der Vakuumkammer abgesaugt werden. Filter können in der Vakuumleitung zwischen der Vakuumkammer und der Vakuumpumpe eingebaut sein, um zu verhindern, dass diese Verunreinigungen in die Vakuumpumpe gelangen können. Jeder Filter in der Vakuumleitung erhöht allerdings den Druckverlust, was in Bereichen von 200 bis 300 mbar noch einen vernachlässigbaren Effekt darstellt, allerdings bei Drücken von unter 20 mbar, insbesondere unter 5 mbar und darunter eine deutliche Erhöhung der Pumpenleistung erfordert, damit eine Evakuierung im unteren Vakuumbereich erfolgen kann.

Das Kondensat des aus der Vakuumkammer abgesaugten Dampfes ist sehr sauer und Maschinenteile der Vakuumpumpe aus Stahl können korrodieren, wenn sie in Kontakt mit dem Kondensat kommen. Es ist zwar möglich, Vakuumpumpenteile sowie Filter oder Abscheider aus rostfreiem Stahl einzusetzen. Allerdings hat sich gezeigt, dass es an Stellen, wo sich Kondensat in einer Totzone ansammelt, auch Edelstahlelemente korrodieren können. Um die Öltemperatur ständig über dem Siedepunkt des Wassers halten zu können, muss die Vakuumpumpe zwangsläufig immer eingeschaltet sein. Dies führt zu einem zusätzlichen Energieverbrauch, denn die Vakuumpumpe bleibt eingeschaltet, selbst wenn sie für das Vakuumkühlverfahren nicht benötigt wird.

Gemäss EP 2832241 A1 wurde daher ein Dampfkondensator sowie eine Vakuumkühlvorrichtung mit einem Dampfkondensator vorgeschlagen, mittels welchem ein grosser Teil des in der Produktkammer der Vakuumkammer entstehenden Dampfs kondensiert werden kann, ohne dass es zu einer Kontamination der Vakuumpumpe kommt, sodass der Leistungsbedarf der Vakuumpumpe verringert werden kann.

Es hat sich allerdings gezeigt, dass die direkte Einleitung der dampfbeladenen Abluft aus der Produktkammer in das Kühlmittel bei gewissen Produkten dazu führen kann, dass Feststoffe mit dem Dampf in das Kühlmittel gelangen und dort zurückgehalten werden. Dieser an sich erwünschte Effekt, der dazu führt, dass ein dampfarmer Luftstrom frei von Verunreinigungen in die Vakuumpumpe eingeleitet wird, hat den Nachteil, dass das Kühlmittel durch diese Feststoffe kontaminiert wird. Daher ist es aus hygienischen Gründen wünschenswert, das mit Feststoffen beladene Kühlmittel aus dem Dampfkondensator zu entfernen und/oder zu reinigen.

Es ist daher Aufgabe der Erfindung, eine Vakuumkühlvorrichtung sowie ein Verfahren zur Vakuumkühlung eines Lebensmittels bereitzustellen, mittels welcher ein mit Kondensat beladenes Kühlmittel aus einem Dampfkondensator entnehmbar ist, um es einer Entsorgungseinrichtung zuzuführen, zu reinigen oder zu rezyklieren.

Die Aufgabe der Erfindung wird durch eine Vakuumkühlvorrichtung nach Anspruch 1 gelöst. Weitere vorteilhafte Ausführungsbeispiele der Vakuumkühlvorrichtung sind Gegenstand der abhängigen Ansprüche 2 bis 5. Ein Verfahren zur Lösung der Aufgabe der Erfindung ist Gegenstand der Ansprüche 6 bis 10.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen. Die nachfolgende detaillierte Beschreibung enthält verschiedene Ausführungsbeispiele für die Vakuumkühlvorrichtung sowie das erfindungsgemässe Verfahren. In der Beschreibung und den Ansprüchen werden die Begriffe "enthalten", "umfassen", "aufweisen" als "enthalten, aber nicht beschränkt auf..." interpretiert.

Eine Vakuumkühlvorrichtung zur Kühlung von Lebensmitteln, insbesondere heissen Backwaren umfasst eine Vakuumkammer, die eine Produktkammer zur Aufnahme des Lebensmittels für dessen Kühlung und einen Behälter enthält. Des Weiteren enthält die Vakuumkühlvorrichtung eine Vakuumquelle, wie beispielsweise eine Vakuumpumpe, die mit der Abscheidekammer verbunden ist, und einen Dampfkondensator zur Kondensation von in der Produktkammer während des Abkühlvorgangs entstehendem Dampf. Der Dampfkondensator ist unterhalb der Produktkammer angeordnet. Der Dampfkondensator kann ein Kühlmittel enthalten, wenn die Vakuumkühlvorrichtung im Betriebszustand ist. Der Dampfkondensator enthält eine Kühlmittelverteilvorrichtung zur Verteilung des Kühlmittels in den Dampfkondensator, wobei die Produktkammer mindestens eine Öffnung zur Einleitung der dampfbeladenen Abluft in das Kühlmittel enthält. Die dampfbeladene Abluft kommt somit im Dampfkondensator in direkten Kontakt mit dem Kühlmittel, sodass ein Stoffaustausch zwischen dem Kühlmittel und der dampfbeladenen Abluft erfolgt. Der Stoffaustausch bewirkt, dass zumindest ein Teil des Dampfes aus der dampfbeladenen Abluft im Kühlmittel kondensiert, wodurch ein mit Kondensat beladenes Kühlmittel erhalten wird. Nach einem Ausführungsbeispiel werden mindestens 75 Volums-% des Dampfes im Kühlmittel kondensiert. Der Dampfkondensator enthält eine Sprühvorrichtung zur Einleitung des Dampfes in das Kühlmittel. Erfindungsgemäß ist die Kühlmittelverteilvorrichtung als Sprühvorrichtung ausgebildet. Durch die Verwendung einer Sprühvorrichtung kann die Stoffaustauschoberfläche weiter vergrössert werden, sodass insbesondere ein höherer Dampfanteil in das Kühlmittel übergeht. Insbesondere können mindestens 80 Volums-% des Dampfes im Kühlmittel kondensiert werden.

Nach einem Ausführungsbeispiel kann der Behälter über ein fluidleitendes Verbindungselement mit dem Dampfkondensator in Verbindung stehen. Das fluidleitende Verbindungselement kann eine Wanne, einen Ablassstutzen, eine Kühlmittelablassleitung sowie ein Kühlmittelablassventil enthalten oder als Verbindungsleitung ausgebildet sein, die ein Kühlmittelablassventil enthält. Nach einem Ausführungsbeispiel kann das Kühlmittel sich am Boden des Dampfkondensators in der Wanne temporär ansammeln und über den Ablassstutzen fortwährend oder periodisch ausgeschleust werden.

Nach einem Ausführungsbeispiel ist eine Abscheidekammer stromabwärts des Dampfkondensators angeordnet, welche die dampfarme Abluft aus dem Dampfkondensator aufnimmt. Gemäss einem Ausführungsbeispiel ist die Abscheidekammer angrenzend an eine Seitenwand der Produktkammer angeordnet. Nach einem Ausführungsbeispiel ist die Abscheidekammer stromabwärts des Behälters in einer zur Vakuumquelle führenden Vakuumleitung angeordnet.

Insbesondere kann der Dampfkondensator als Bestandteil der Vakuumkammer ausgebildet sein. Insbesondere ist der Dampfkondensator als eine Filterstrecke für das Rückhalten von Verunreinigungen im Dampf ausgebildet. Diese Anordnung hat den Vorteil, dass die Verunreinigungen sich im Dampf anreichern und die Verunreinigungen nach Einleitung des Dampfes in das Kühlmittel im Kühlmittel zurückgehalten werden. Der Dampfkondensator enthält nach einem Ausführungsbeispiel eine Wanne, die einen Zwischenraum und einen Ansaugraum aufweist, wobei der Zwischenraum durch einen Kammerboden nach oben begrenzt ist. Der Kammerboden dient der Aufnahme der Gebinde für die Lebensmittel, insbesondere Gestelle, Regale, Stikkenwagen oder dergleichen.

Der Kammerboden enthält mindestens eine Öffnung. Durch diese Öffnung kann im Betriebszustand die dampfbeladene Abluft von der Produktkammer in den Zwischenraum des Dampfkondensators eintreten. Der Betriebsdruck in der Wanne ist niedriger als der Umgebungsdruck. Der Zwischenraum wird durch den Kammerboden nach oben begrenzt und einen Zwischenboden nach unten begrenzt. Der Zwischenboden kann nach einem Ausführungsbeispiel eine Mehrzahl von Öffnungen oder Stromstörelementen umfassen, welche teilweise in das Kühlmittel hineinragen oder oberhalb des Flüssigkeitsspiegels des Kühlmittels angeordnet sein können, sodass ein Kühlmittelstrom entlang des Zwischenbodens fliessen kann.

Der Zwischenboden kann als ein Trennelement angesehen werden, welches den Zwischenraum von einem darunterliegenden Ansaugraum trennt. Der Ansaugraum ist mit der Vakuumquelle verbindbar, sodass der Dampf vom Dampfraum mittels des Dampfeinleitungselements in dem Kühlmittel aufnehmbar ist, wenn durch die Vakuumquelle im Ansaugraum ein Unterdruck erzeugbar ist. Ein dampfarmer Luftstrom verlässt Ansaugraum in Richtung der Abscheidekammer, welche mit der Vakuumquelle verbindbar ist.

Die Vakuumquelle umfasst nach einem Ausführungsbeispiel eine Vakuumpumpe, wobei die Vakuumpumpe insbesondere eine drehzahlgeregelte Vakuumpumpe ist. Durch die Anpassung der Drehzahl kann der Druckverlauf genau geregelt werden. Somit können beliebige Druckverläufe realisiert werden, indem die Drehzahl der Vakuumpumpe entsprechend angepasst wird. Der Verlauf des Kühlverfahrens kann die Qualität des vakuumgekühlten Lebensmittels beeinflussen. Der Verlauf des Kühlverfahrens wird insbesondere eine Regelung des Drucks in der Vakuumkammer sowie gegebenenfalls eine Regelung der Temperatur festgelegt und überwacht.

Nach einem Ausführungsbeispiel kann eine Regelungseinheit für die Kühlmittelmenge und/oder die Kühlmitteltemperatur vorgesehen sein. Insbesondere kann es sich bei der Kühlmittelmenge um eine Kondenswassermenge handeln. Insbesondere kann es sich bei der Kühlmitteltemperatur um eine Kondenswassertemperatur handeln. Nach einem Ausführungsbeispiel kann eine Regelungseinheit für die Kondenswassermenge und/oder die Kondenswassertemperatur vorgesehen sein.

Ein Verfahren zur Vakuumkühlung eines Lebensmittels umfasst die Schritte: Befüllen einer Produktkammer einer Vakuumkühlvorrichtung mit dem Lebensmittel, Schliessen der Produktkammer, Betätigen einer Vakuumquelle zur Erzeugung eines negativen Drucks. In der Produktkammer wird durch das Abkühlen des Lebensmittels entweichende dampfbeladene Abluft in einen Dampfkondensator eingeleitet. Der Dampfkondensator steht mit der Produktkammer in fluidleitender Verbindung. Die Produktkammer enthält mindestens eine Öffnung zur Einleitung der dampfbeladenen Abluft in ein Kühlmittel, wobei das Kühlmittel mittels einer Kühlmittelverteilvorrichtung in den Dampfkondensator verteilt wird, sodass ein Anteil des Dampfes im Kühlmittel kondensiert wird, sodass ein mit Kondensat beladenes Kühlmittel erhalten wird.

Das Kühlmittel wird erfindungsgemäß mittels der Kühlmittelverteilvorrichtung in den Dampfkondensator eingesprüht, wobei die dampfbeladene Abluft in das eingesprühte Kühlmittel eingeleitet wird. Das heisst das Kühlmittel wird in den Innenraum des Dampfkondensators eingesprüht, wo es mit der dampfbeladenen Abluft in Kontakt kommt. Durch den Kühleffekt wird die Kondensation der dampfbeladenen Abluft begünstigt. Der Anteil des kondensierten Dampfes im Kühlmittel kann mindestens 75 Volums% des in der dampfbeladenen Abluft befindlichen Dampfes umfassen. Nach Abschluss der Vakuumkühlung wird die Produktkammer belüftet und der Druck in der Produktkammer steigt wieder an. Wenn der Innendruck in der Produktkammer im Wesentlichen dem Umgebungsdruck entspricht, kann eine Entnahme des gekühlten Lebensmittels aus der Produktkammer erfolgen. Insbesondere kann die Produktkammer einen Kammerboden aufweisen, welcher die Öffnung enthält, durch welche die dampfbeladene Abluft in den Dampfkondensator eintritt.

Das mit Kondensat beladene Kühlmittel kann nach einem Ausführungsbeispiel periodisch oder aufgrund des Erreichens eines vorgegebenen Grenzwertes ausgetauscht werden, insbesondere, wenn dessen Temperatur zu hoch wird, die Konzentration an Verunreinigungen einen Maximalwert erreicht oder der pH-Wert auf 4 oder weniger gesunken ist. Somit können Verunreinigungen im Behälter gesammelt werden und mit dem Kühlmittel entsorgt werden oder einer nachgeschalteten Entsorgungsanlage zugeführt werden. Das mit Kondensat beladene Kühlmittel kann in einem Behälter aufgenommen werden, wobei der Behälter ein Ventil aufweist, um das mit Kondensat beladene Kühlmittel aus dem Behälter abzulassen, wobei nach dem Entleeren des Behälters das Ventil geschlossen wird. Nach dem Entleeren des Behälters kann ein Ventil geöffnet werden, welches eine Verbindungsleitung zur Vakuumquelle öffnet, sodass der Behälter evakuiert werden kann, bevor er während eines nachfolgenden Vakuumkühlvorgangs wieder befüllt wird. Nach einem Ausführungsbeispiel kann die Kühlung des Kühlmittels mittels eines Wärmetauschers erfolgen, der beispielsweise mit Frischwasser gespeist wird.

Nach einem Ausführungsbeispiel wird das mit Kondensat beladene Kühlmittel kontinuierlich oder periodisch abgelassen. Hierzu ist eine Verbindungsleitung vorgesehen, die den tiefsten Punkt der Wanne des Dampfkondensators mit einem Behälter verbindet. Dieser Behälter ist als geschlossener Behälter ausgebildet, der keine Wand mit der Vakuumkammer gemeinsam haben kann. In der Verbindungsleitung ist ein Kühlmittelablassventil angeordnet. Ein Kühlmittelversorgungsventil öffnet und schliesst den Zulauf zum Behälter. Der Behälter weist nach einem Ausführungsbeispiel eine Belüftungsleitung auf, die über ein Belüftungsventil verschliessbar ist. Des Weiteren weist der Behälter nach einem Ausführungsbeispiel eine Vakuumleitung auf, die mittels eines Ventils verschliessbar ist. Der Behälter weist gemäss diesem Ausführungsbeispiel eine Kühlmittelablassleitung auf. Diese Kühlmittelablassleitung kann mittels eines Ventils verschliessbar sein.

Eine Bypassverbindungsleitung zwischen Vakuumkammer und Vakuumquelle bzw. der zur Vakuumquelle führenden Vakuumleitung kann vorgesehen sein, welche durch ein Bypassventil geöffnet oder geschlossen werden kann. Wenn das Bypassventil geöffnet ist, wird die dampfbeladene Abluft nicht in den Dampfkondensator geleitet, sondern direkt in die Vakuumleitung eingeleitet. Diese Bypassverbindungsleitung kann am Ende des Vakuumkühlvorgangs geöffnet werden, wenn die Abluft nur noch wenig Dampf enthält. Da der Druckverlust niedriger ist, wenn die Abluft aus der Vakuumkammer direkt in die Vakuumleitung geführt wird, können niedrigere Drücke in der Vakuumkammer erreicht werden.

Das Kühlmittel dient in vorteilhafter Weise gleichzeitig als Filterstrecke, um mit der dampfbeladenen Abluft mitgerissene Verunreinigungen aus der Produktkammer im Kühlmittel durch Kondensation abzuscheiden. Hierdurch können Verunreinigungen einfach gesammelt werden und sichergestellt werden, dass sie nicht in die Vakuumpumpe gelangen. Somit können trocken laufende Vakuumpumpen eingesetzt werden, da die dampfarme Luft, die von der Abscheidekammer angesaugt wird, einen allenfalls niedrigen Wasserdampfgehalt sowie keine Verunreinigungen mehr enthält.
Das saure Kondensat der dampfbeladenen Abluft wird verdünnt, indem es im Dampfkondensator vom Kühlmittel Wasser aufgenommen wird. Hierdurch wird die Gefahr von Korrosionsschäden durch an den Bauteilen verringert, die mit dem Kondensat in Kontakt sind.
Der Verlauf der Vakuumkühlung kann als Druckverlauf in Abhängigkeit von der Abkühlzeit in einer elektronischen Kontrolleinheit gespeichert werden und immer wieder abgerufen werden. Durch die präzise Regelung der Vakuumpumpe ist es möglich, Chargen mit gleichen Produkteigenschaften und somit besser reproduzierbaren Produkteigenschaften zu erhalten. Die Vakuumpumpe muss nur für die Dauer des Vakuumprozesses, also der Kühldauer im Lastbetrieb eingeschaltet sein, sodass sie energieeffizient eingesetzt wird. Mit einer drehzahlgeregelten Vakuumpumpe können alle Lebensmittel gekühlt werden, das heisst, es kann ein beliebiger Verlauf der Vakuumkühlung realisiert werden, insbesondere kann eine zusätzliche Befeuchtung der Lebensmittel entfallen. Die Vakuumpumpe muss nicht abgestellt werden, sie kann im Bereitschaftsbetrieb weiterlaufen. Im Bereitschaftsbetrieb verrichtet die Vakuumpumpe keine Arbeit.

Nachfolgend werden Ausführungsbeispiele der Erfindung anhand der Zeichnungen erläutert. Darin zeigen:
- Fig. 1: einen Schnitt durch eine Vakuumkühlvorrichtung nach einem ersten Ausführungsbeispiel,
- Fig. 2: einen Schnitt durch eine Vakuumkühlvorrichtung nach einem zweiten Ausführungsbeispiel,
- Fig. 3: einen Schnitt durch eine Vakuumkühlvorrichtung nach einem dritten Ausführungsbeispiel,
- Fig. 4: eine Ansicht einer Vakuumkühlvorrichtung nach einem der vorhergehenden Ausführungsbeispiele in einer Ansicht von unten,
- Fig. 5: ein Detail eines Zwischenbodens 8 nach dem in Fig. 4 gezeigten Ausführungsbeispiel,
- Fig. 6: ein Detail eines Kammerbodens nach dem in Fig. 4 gezeigten Ausführungsbeispiel,
- Fig. 7: den Dampfkondensator der Vakuumkammer gemäss dem in Fig. 4 gezeigten Ausführungsbeispiel in einer Schnittdarstellung,
- Fig. 8: ein Detail einer Anordnung zur Aufnahme des mit Kondensat beladenen Kühlmittels gemäss dem in Fig. 4 gezeigten Ausführungsbeispiel,
- Fig. 9: ein Detail des der in Fig. 8 gezeigten Anordnung von der Rückseite.

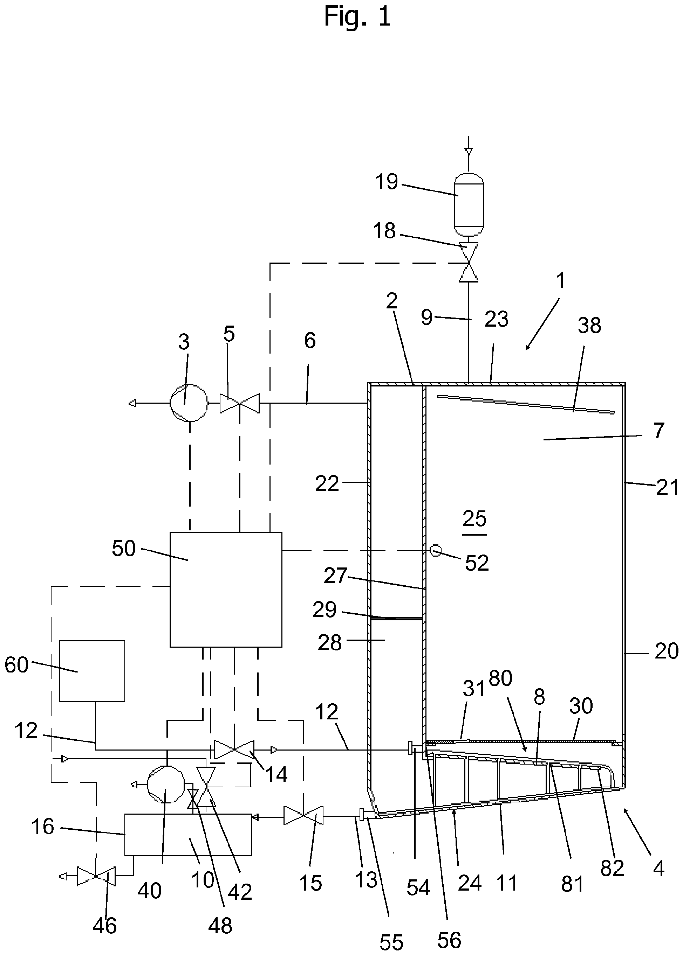

Die in Fig. 1 dargestellte Vakuumkühlvorrichtung 1 umfasst eine Vakuumkammer 2, eine Vakuumquelle 3 und einen Dampfkondensator 4. Die Vakuumquelle 3 ist eine Vakuumpumpe, die über eine Vakuumleitung 6 mit der Vakuumkammer 2 in fluidleitender Verbindung steht. In der Vakuumleitung 6 ist ein Ventil 5 im Zulauf zur Vakuumpumpe angeordnet. Die Vakuumkammer 2 enthält eine Produktkammer 7, die im Betriebszustand die zu kühlenden Lebensmittel enthält. Des Weiteren enthält die Vakuumkühlvorrichtung 1 eine Abscheidekammer 28. Die Abscheidekammer 28 ist neben der Produktkammer 7 angeordnet und von dieser durch eine Zwischenwand 27 getrennt.
Die Vakuumkammer 2 wird von einer Wand 22, einer Wand 21, einer Decke 23 sowie einem Boden 24 begrenzt. Die vordere Wand 26 ist in dieser Darstellung weggeschnitten, um den Blick in das Innere der Vakuumkammer 2 freizugeben. Eine hintere Wand 25 schliesst an die Decke, die Wände 21, 22 sowie den Boden 24 an.

Die Vakuumkammer 2 kann im Bereich der Wand 21, der Wand 26 oder der Wand 25 mindestens eine nicht dargestellte Tür 20 enthalten, welche geöffnet wird, um die Lebensmittel in der Produktkammer 7 zu platzieren und nach Abschluss der Vakuumkühlung wieder aus der Produktkammer 7 zu entnehmen. Die Produktkammer 7 kann mittels eines Belüftungsventils 18, welches oberhalb der Decke 23 angeordnet ist, belüftet werden. Das Belüftungsventil 18 ist über eine Belüftungsleitung 9 mit der Produktkammer 7 verbunden. In der Belüftungsleitung 9 ist ein Filterelement 19 angeordnet, um Verunreinigungen aus der Frischluft herauszufiltern, welche die Qualität der Lebensmittel beeinträchtigen können. Das Belüftungsventil 18 kann als variables Drosselelement ausgestaltet sein. Es kann während des Kühlvorgangs zumindest teilweise geöffnet sein. Während des Beladens und Entladens der Lebensmittel verbleibt das Belüftungsventil 18 in geöffnetem Zustand, damit für Personen, welche sich in der Produktkammer befinden, eine ausreichende Frischluftversorgung gewährleistet ist, selbst wenn die Tür oder die Türen der Vakuumkammer 2 geschlossen ist/sind. Da zusammen mit der Frischluft Feuchtigkeit in die Produktkammer 7 gelangt, wird die Frischluft innerhalb der Produktkammer 7 über ein Ablenkelement 38 in Richtung zumindest einer der Wände 21, 25, 26, 27 abgelenkt. Die Wand 26 ist in Fig. 1 nicht sichtbar, da sie vor der Zeichnungsebene liegt und die Wand 25 bildet die hintere Begrenzung der Produktkammer 7 aus.
Während des Kühlvorgangs kondensieren Tröpfchen auf der Oberfläche des Ablenkelements 38 oder an einer der Wände 21, 25, 26, 27. Das Ablenkelement 38 kann mit Ablaufrinnen ausgestattet sein oder es endet an seinem tiefsten Punkt an einer Stelle, von welcher das Kondensat direkt auf den Kammerboden tropfen kann. Mit diesen Massnahmen kann vermieden werden, dass das Kondensat in Kontakt mit den Lebensmitteln kommt.

Die Vakuumkammer 2 enthält den Dampfkondensator 4, der den Boden der Produktkammer 7 ausbildet. Der Dampfkondensator 4 ist von der Produktkammer 7 durch einen Zwischenboden 8 getrennt. Oberhalb des Zwischenbodens 8 ist ein Kammerboden 30 angeordnet. Auf dem Kammerboden 30 werden die Lebensmittel in ihren Gestellen abgestellt. Der Kammerboden 30 dient demnach als Auflage für einen Stikkenwagen, welcher die Gestelle trägt, welche die Auflageflächen für die Lebensmittel ausbilden. Unterhalb des Zwischenbodens 8 befindet sich der Boden 24. Der Boden 24 enthält eine Wanne 11.
Über den Zwischenboden 8 erfolgt eine Flüssigkeitsströmung in Form einer Filmströmung des Kühlmittels. Diese Flüssigkeitsströmung wird durch Kühlmittel erzeugt, welches über den Kühlmitteleintrittsstutzen 54 in den Innenraum des Dampfkondensators 4 gelangt.

Eine Kühlmittelzufuhrleitung 12 mündet in den Raum zwischen dem Kammerboden 30 und dem Zwischenboden 8. Die Kühlmittelzufuhrleitung 12 mündet in einen Zwischenraum 80. Der Zwischenraum 80 erstreckt sich im Wesentlichen zwischen dem Kammerboden 30 und dem Zwischenboden 8. An der Mündung der Kühlmittelzufuhrleitung 12 ist ein Einlassstutzen 54 vorgesehen, der eine Kühlmittelverteilvorrichtung 56 enthält. In der Kühlmittelzufuhrleitung 12 ist ein Kühlmittelventil 14 angeordnet. Das Kühlmittel wird aus einem Kühlmittelreservoir 60 erhalten. Insbesondere kann es sich bei dem Kühlmittelreservoir 60 um einen Wasserbehälter oder einen Kaltwasseranschluss handeln. Gegebenenfalls kann eine Pumpe vorgesehen sein, um das Kühlmittel in die Vakuumkammer zu fördern, die hier nicht dargestellt ist, weil sie nicht in allen Vakuumkühlvorrichtungen 1 vorgesehen sein muss.

Der Zwischenboden 8 dient als Stoffaustauschfläche. Die Abluft wird in den Kühlmittelstrom eingetragen und der Dampf durch Kondensation der Luft entzogen. Gleichzeitig erfolgt ein Wärmeübergang zwischen Dampf und Kühlmittel. Unter Abluft wird hier ein Wasserdampf-Luftgemisch verstanden, welches aus der Produktkammer 7 abgesaugt wird, wenn in der Produktkammer 7 bei Inbetriebnahme der Vakuumquelle 3 ein Vakuum angelegt wird um die Produktkammer 7 über die Vakuumleitung 6 zu evakuieren.
Kühlmittel und Dampf stehen miteinander direkt in Kontakt, denn von der oder den Öffnungen 31 wird der Dampf auf die Oberfläche des Kühlmittelstroms übertragen. Der Dampf strömt durch die Öffnung oder die Öffnungen 31 und in die Wanne 11. Sobald der Dampf mit dem Kühlmittel, insbesondere Wasser, in Berührung kommt, kondensiert der Wasserdampfanteil. Allfällige im Dampf befindliche Verunreinigungen verbleiben im Kühlmittel, welches sich mit Verunreinigungen anreichert. Das Kühlmittel dient daher als Filterstrecke für den Dampf und bildet ein mit Kondensat beladenes Kühlmittel. Die dampfarme Luft tritt in die Abscheidekammer 28 ein. Das mit Kondensat beladene Kühlmittel kann die Wanne 11 über einen Ablassstutzen 55 verlassen. Üblicherweise wird Wasser als Kühlmittel verwendet.

Kühlmittel und Abluft stehen im Dampfkondensator 4 miteinander direkt in Kontakt, denn im Kammerboden 30 ist mindestens eine Öffnung 31 vorgesehen, die in Fig. 1 im Schnitt dargestellt ist. Die Abluft strömt durch die Öffnung 31 und gelangt auf die Oberseite des Zwischenbodens 8. Im Zwischenraum 80 zwischen dem Kammerboden 30 und dem Zwischenboden 8 kommt die Abluft mit dem Kühlmittel in Kontakt, welches über den Einlassstutzen 54 in den Zwischenraum 80 eintritt. Der Einlassstutzen 54 enthält die Kühlmittelverteilvorrichtung 56 die erfindungsgemäß als eine Sprühvorrichtung ausgebildet ist, die insbesondere als eine Düse ausgestaltet sein kann. Sobald die Abluft mit dem Kühlmittel in Berührung kommt, kondensiert der Dampfanteil der Abluft im Kühlmittel. Unter Dampf ist hier im wesentlichen Wasserdampf zu verstehen, welcher Verunreinigungen enthalten kann, die durch die Lebensmittel bedingt sind. Diese Verunreinigungen können Feststoffe und/oder Flüssigkeiten, wie beispielsweise Fette oder Öle, umfassen. Allfällige in der Abluft befindliche Verunreinigungen reichern sich im Dampf an und verbleiben bei Kondensation desselben im Kühlmittel zurück, welches sich mit dem kondensierten Dampf sowie Verunreinigungen anreichert. Nachfolgend wird dieser Kühlmittelstrom als ein mit Kondensat beladenes Kühlmittel bezeichnet.
Das sich mit Kondensat beladende Kühlmittel strömt entlang des Zwischenbodens 8 sowie durch im Zwischenboden 8 angeordnete Öffnungen 81 in die darunterliegende Wanne 11. Der sich mit Kondensat beladende Kühlmittelstrom fliesst wasserfallartig durch die Öffnungen 81 und über die Kante 82 des Zwischenbodens 8 in die Wanne 11. Hierbei entsteht eine Spritzschicht, die den Stoffaustausch weiter begünstigt. Das heisst, dass ein grosser Teil des Stoffaustauschs ist bereits erfolgt, wenn das mit Kondensat beladene Kühlmittel die Wanne 11 erreicht.
Der Zwischenboden 8 ist im vorliegenden Ausführungsbeispiel um einen Neigungswinkel gegen die Horizontalebene geneigt, um das Abströmen des mit Kondensat beladenen Kühlmittels zu begünstigen. Das Kühlmittel dient somit als Filterstrecke für den Dampf, das heisst, der Dampf wird aus der Abluft der Produktkammer 7 zumindest teilweise kondensiert, sodass den Dampfkondensator 4 ein dampfarmer Luftstrom verlässt, der von der Vakuumpumpe 3 aus der Vakuumkammer 2 entfernt wird.
Der dampfarme Luftstrom tritt in die Abscheidekammer 28 ein. Somit kondensiert der in der Abluft der Produktkammer 7 enthaltene Dampf auf seinem Weg durch das Kühlmittel zu einem Kondensat, welches im Kühlmittel aufgenommen wird und somit ein mit Kondensat beladenes Kühlmittel bildet. Das mit Kondensat beladene Kühlmittel wird in der Wanne 11 gesammelt und in Richtung des Ablassstutzens 55 geleitet. Die Wanne 11 weist einen Wannenboden auf, welcher hier den Boden 24 der Vakuumkammer bildet, der ebenfalls einen Neigungswinkel zur Horizontalebene einschliesst. Der Neigungswinkel der Wanne 11 kann auch abschnittsweise variieren. Der Ablassstutzen 55 befindet sich am tiefsten Punkt der Wanne 11. An den Ablassstutzen 55 schliesst eine Kühlmittelablassleitung 13 an. Das mit Kondensat beladene Kühlmittel wird über die Kühlmittelablassleitung 13 aus der Vakuumkammer 2 entfernt.

Der dampfarme Luftstrom wird über ein in der Abscheidekammer 28 befindliches Abscheideelement 29 geleitet, sodass allenfalls im Luftstrom noch befindlicher Restdampf in die Vakuumleitung 6 gelangen kann. Dieses Abscheideelement kann ein Tropfenabscheider sein, der beispielsweise ein Lochblech oder ein Gewirk oder Gewebe umfasst, an welchem Tropfen hängen bleiben. Mehrere derartige Abscheideelemente 29 können hintereinander und/oder übereinander angeordnet werden. Der dampfarme Luftstrom gelangt nach dem Durchlauf durch das Abscheideelement 29 in die Vakuumleitung 6 und wird über die Vakuumpumpe 3 abgesaugt.

In der Kühlmittelablassleitung 13 ist ein Kühlmittelablassventil 15 angeordnet.
Das mit Kondensat beladene Kühlmittel wird durch die Kühlmittelablassleitung 13 zu einem Behälter 10 geführt, in welchem sich das mit Kondensat beladene Kühlmittel sammeln kann. Gegebenenfalls kann der Behälter 10 einen Abscheider zum Abscheiden der Verunreinigungen enthalten.

Der Behälter 10 kann mindestens ein Ventil 46 enthalten, um das mit Kondensat beladene Kühlmittel periodisch oder kontinuierlich abzulassen. Zusätzlich kann eine Absperrvorrichtung 16 vorgesehen sein, die einen Schieber umfassen kann, der ein Ende des Behälters 10 verschliesst. Wenn dieser Schieber geöffnet ist, kann der Behälter 10 einfach gereinigt werden. An den Behälter 10 ist eine Pumpe 40 angeschlossen, sodass die Flüssigkeit aus dem Innenraum des Behälters entfernt werden kann, um das mit Kondensat beladene Kühlmittel aus der Wanne 11 abzusaugen. In der Verbindungsleitung vom Behälter 10 zur Pumpe 40 ist ein Ventil 48 angeordnet. Es hat sich herausgestellt, dass sich in der Wanne 11 befindliches mit Kondensat beladenes Kühlmittel durch das Kondensat aufwärmt, sodass wie im Stand der Technik ein Kühlelement in der Wanne vorgesehen werden muss. Ein derartiges Kühlelement ist allerdings aufwändig zu reinigen und zu warten, daher hat sich eine Lösung mit einem Kühlelement in der Wanne 11 als weniger vorteilhaft erwiesen. Wenn der Vakuumkühlvorgang in der Vakuumkammer 2 abgeschlossen ist, kann das Kühlmittelventil 14 geschlossen werden und die Pumpe 40 ausgeschaltet werden. Zur Belüftung wird ein Belüftungsventil 42 geöffnet, sodass der Druck im Innenraum des Behälters 10 auf Umgebungsdruck ansteigen kann. Dann kann das Ventil 46 geöffnet werden, der Behälter 10 entleert werden sowie eine Reinigung des Behälters 10 erfolgen.

Wenn in der Vakuumkühlvorrichtung 1 ein Vakuumkühlverfahren durchgeführt werden soll, wird die Produktkammer 7 mit einem zu kühlenden Produkt beschickt. Sämtliche Verfahrensschritte können von einer Regeleinheit 50 gesteuert werden. Die Steuerleitungen werden in Fig. 1 mit strichlierten Linien gekennzeichnet. Dann werden sämtliche Türen 20 zur Produktkammer 7 geschlossen. Das Belüftungsventil 18 wird geschlossen, das Ventil 5 in der Vakuumleitung 6 geöffnet und die Vakuumpumpe 3 in Betrieb genommen. Das Kühlmittelventil 14 wird geöffnet, um Kühlmittel in die Kühlmittelverteilvorrichtung 56 einzuleiten. Das Belüftungsventil 42 des Behälters 10 sowie die Absperrvorrichtung 16 werden geschlossen, das Ventil 48 geöffnet und die Pumpe 40 in Betrieb genommen. Sobald der Behälterdruck im Wesentlichen dem in der Vakuumkammer befindlichen Druck entspricht, wird auch das Kühlmittelablassventil 15 geöffnet. Das Kühlmittel kann nunmehr vom Kühlmittelreservoir 60 über die Kühlmittelzufuhrleitung 12 in die Vakuumkammer gelangen, dort das Kondensat aus der Abluft aufnehmen und hiermit die Abluft kühlen, sowie eine Temperatursenkung in der Produktkammer 7 bewirken. Das Kühlmittel kann zumindest teilweise als Sprühnebel in dem Dampfkondensator 4 ausgebildet sein, wenn die Kühlmittelverteilvorrichtung 56 eine Zerstäubung des Kühlmittels in Tröpfchen bewirkt oder in dem Zwischenraum 80 Einbauten vorgesehen sind, welche die Erzeugung eines Kühlmittelsprühnebels bewirken oder unterstützen. Je grösser die Stoffaustauschfläche des Kühlmittels im Dampfkondensator 4 ist, ein desto grösserer Dampfanteil der Abluft kann im Kühlmittel kondensiert werden. Das mit Kondensat beladene Kühlmittel fliesst in der Wanne 11 in Richtung des Ablassstutzens 55 und verlässt die Vakuumkammer 2 durch den Ablassstutzen, um in die Kühlmittelablassleitung 13 eingeleitet zu werden.
Das mit Kondensat beladene Kühlmittel passiert das Kühlmittelablassventil 15 und gelangt in den Behälter 10, in dem es sich sammelt.
Der dampfarme Luftstrom verlässt den Dampfkondensator über einen von der Wand 22, der Zwischenwand 27, der vorderen Wand 26 sowie der hinteren Wand 25 begrenzten Kanal, der eine Abscheidekammer 28 bildet. Der dampfarme Luftstrom kann in der Abscheidekammer 28 ein Abscheideelement 29 durchströmen, sodass noch allfälliger im dampfarmen Luftstrom befindlicher Restdampf kondensiert werden kann und in die Wanne 11 eingeleitet werden kann. Der dampfarme Luftstrom verlässt die Vakuumkammer 2 über die Vakuumleitung 6, die zur Vakuumpumpe 3 führt. Die Vakuumpumpe 3 bleibt für die Dauer der Vakuumkühlung eingeschaltet. Es ist möglich, dass in einzelnen Phasen der Vakuumkühlung das Belüftungsventil 18 geöffnet wird, um den Temperaturverlauf und den Druckverlauf in der Produktammer 7 dem entsprechenden Solltemperaturverlauf sowie Solldruckverlauf anzupassen. Die Temperatur und/oder der Druck in der Produktkammer 7 können über ein Messelement 52 ermittelt werden. Wenn das Ende des Vakuumkühlvorgangs erreicht ist, wird das Belüftungsventil 18 geöffnet, bis der Druck in der Produktkammer 7 dem Umgebungsdruck entspricht. Die Vakuumpumpe 3 wird abgeschaltet und das Ventil 5 geschlossen. Gleichzeitig wird das Kühlmittelventil 14 geschlossen. Das Kühlmittelablassventil 15 wird geschlossen, wenn sich kein mit Kondensat beladenes Kühlmittel mehr in der Wanne 11 oder der Kühlmittelablassleitung 13 befindet. Dann wird auch die Pumpe 40 abgeschaltet und das Belüftungsventil 42 geöffnet. Wenn der Innendruck im Behälter 10 dem Umgebungsdruck entspricht, kann das Ventil 46 geöffnet werden, um den Behälter 10 zu entleeren.
Sobald der Behälter 10 entleert und gegebenenfalls gereinigt ist, kann das Ventil 46 wieder geschlossen werden. Die Vakuumkühlvorrichtung 1 ist einsatzbereit für einen weiteren Vakuumkühlvorgang.

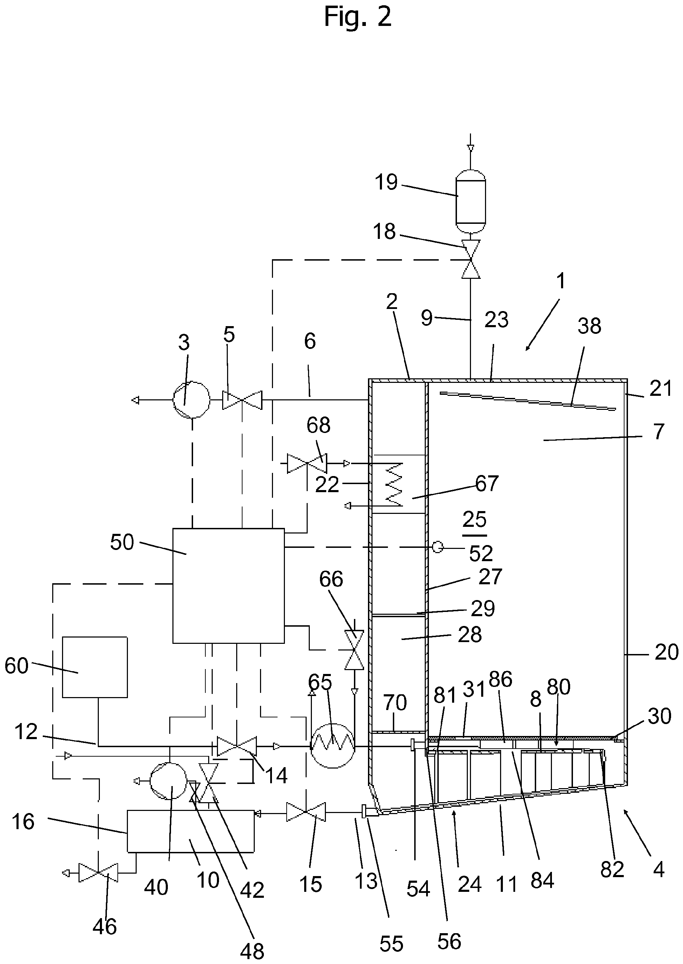

Fig. 2 zeigt eine Vakuumkühlvorrichtung nach einem zweiten Ausführungsbeispiel. Elemente, welche eine Bauweise oder eine Funktion haben, welche dem in Fig. 1 dargestellten Ausführungsbeispiel entspricht, sind mit denselben Bezugszeichen versehen wie in Fig. 1. Das in Fig. 2 gezeigte Ausführungsbeispiel unterscheidet sich beispielsweise vom ersten Ausführungsbeispiel durch die Anordnung eines Kühlers 65 in der Kühlmittelzufuhrleitung 12. Der Kühler 65 hat einen Kältemittelzulauf, welcher mit einer nicht dargestellten Kältemittelquelle verbunden ist. Das Kältemittel hat beim Eintritt in den Kühler 65 eine geringere Temperatur als das durch die Kühlmittelzufuhrleitung 12 zugeführte Kühlmittel, sodass das Kühlmittel zusätzlich durch das Kältemittel vorgekühlt werden kann. Der Kältemittelzulauf kann mittels eines Ventils 66 geregelt sein. Insbesondere kann der Kältemittelzulauf in Abhängigkeit von der in der Vakuumkammer 2 benötigten Kühlmitteltemperatur geregelt werden. Je nach dem in der Produktkammer 7 zu kühlenden Produkt kann der Kühler 65 daher zugeschaltet werden oder wie in dem Ausführungsbeispiel gemäss Fig. 1 das Kühlmittel direkt vom Kühlmittelreservoir 60 in die Vakuumkammer 2 eingebracht werden.
In Fig. 2 ist auch ein Luftkühler 67 gezeigt, der zur Kühlung des dampfarmen Luftstroms bestimmt ist, welcher zur Vakuumpumpe 3 geleitet wird. Der Luftkühler 67 ist im vorliegenden Ausführungsbeispiel im Inneren der Abscheidekammer 28 angeordnet, er könnte aber auch im Bereich der Vakuumleitung 6 angeordnet sein, also ausserhalb der Vakuumkammer 2. Der Luftkühler 67 kann mit Kühlmittel aus dem Kühlmittelreservoir 60 betrieben werden oder mit einem anderen Kältemittel, beispielsweise dem Kältemittel, welches auch für den Kühler 65 zum Einsatz kommt, wenn sowohl ein Kühler 65 als auch ein Luftkühler 67 vorgesehen sein sollen. Insbesondere kann der Luftkühler 67 eingesetzt werden, um durch Kühlung des über die Vakuumleitung 6 in die Vakuumpumpe 3 eintretenden dampfarmen Luftstroms eine weitere Kondensation des Restdampfes zu bewirken, sodass die Dampfbelastung für die Vakuumpumpe 3 noch weiter verringert werden kann.
Ein Vorteil der Anordnung des Luftkühlers 67 in der Abscheidekammer 28 ist die Möglichkeit, das im Luftkühler 67 anfallende Kondensat ebenfalls in die Wanne 11 einzuleiten.

Zwischen dem Einlassstutzen 54 und dem Abscheideelement 29 kann ein Trennboden 70 angeordnet sein. Dieser Trennboden 70 dient dazu, gegebenenfalls mit dem dampfarmen Luftstrom mitgerissenes mit Kondensat beladenes Kühlmittel aufzufangen und wieder in die Wanne 11 zurückzuleiten. Der Trennboden 70 kann beispielsweise als Lochblech ausgebildet sein.

Des Weiteren ist in Fig. 2 eine Variante der Kühlmittelverteilvorrichtung 56 sowie des Zwischenbodens 8 gezeigt. Der Zwischenboden 8 weist keinen Neigungswinkel auf, sodass der Zwischenboden 8 nach diesem Ausführungsbeispiel im Wesentlichen horizontal verläuft. Der Zwischenboden 8 weist mindestens eine Öffnung 84 auf, deren Längsachse in Strömungsrichtung des Kühlmittelstroms verläuft oder in einem spitzen Winkel zum Kühlmittelstrom verläuft. Diese Öffnung 84 ist als schlitzförmige Öffnung ausgebildet. Der Zwischenboden 8 kann auch wie im Ausführungsbeispiel gemäss Fig. 1 eine oder mehrere Öffnungen 81 enthalten, die sich quer zur Strömungsrichtung des Kühlmittelstroms erstrecken. Die Strömungsrichtung des Kühlmittelstroms auf dem Zwischenboden 8 und/oder des Sprühnebels im Zwischenraum 80 verläuft im Wesentlichen von der Kühlmittelverteilvorrichtung 56 zur Kante 82 des Zwischenbodens 8. Die Öffnungen 81 oder 84 können auch als Langlöcher oder als Bohrungen mit kreisförmigen Querschnitt ausgebildet sein.
Des Weiteren kann am Zwischenboden 8 oder auf der Unterseite des Kammerbodens 30 ein Stromstörelement 86 angeordnet sein.

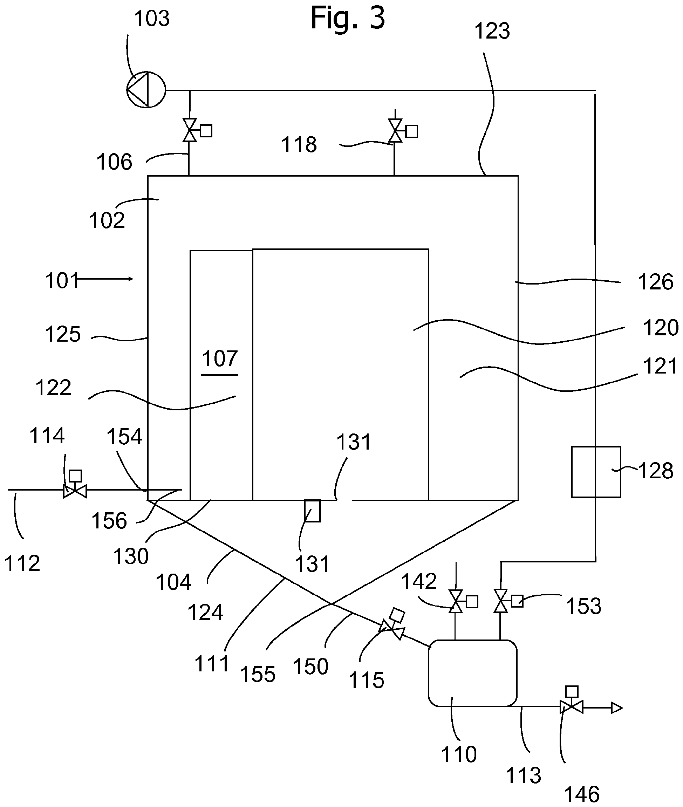

Die in Fig. 3 dargestellte Vakuumkühlvorrichtung 101 umfasst eine Vakuumkammer 102, eine Vakuumquelle 103 und einen Dampfkondensator 104. Die Vakuumquelle 103 ist eine Vakuumpumpe, die über eine Vakuumleitung 106 mit der Vakuumkammer 102 in fluidleitender Verbindung steht. In der Vakuumleitung 106 ist ein Ventil 105 angeordnet. Die Vakuumkammer 102 enthält eine Produktkammer 107, die im Betriebszustand die zu kühlenden Lebensmittel enthält. Des Weiteren enthält die Vakuumkühlvorrichtung 101 einen Behälter 110. Der Behälter 110 ist getrennt von der Vakuumkammer 102 angeordnet und mit dieser über eine Verbindungsleitung 150 verbunden. Der Behälter weist eine Leitung 113 auf, welche ein Ventil 146 enthält, um das mit Kondensat beladene Kühlmittel aus dem Behälter 110 abzulassen, wobei nach dem Entleeren des Behälters das Ventil 146 geschlossen wird.

In dem dargestellten Ausführungsbeispiel gemäss Fig. 3 ist die Vakuumkammer 102 von einer Wand 121, in welcher eine Tür 120 eingebaut ist, einer gegenüberliegenden Wand 122, einer hinteren Wand 125 und einer vorderen Wand 126 seitlich begrenzt. Die Tür 120 ist in der vorliegenden Darstellung als teilweise geöffnete Schiebetür dargestellt. Von Wand 122 ist durch die Öffnung der Schiebetür nur ein Teil sichtbar, ebenso wie von der Produktkammer 107 nur ein Teil dargestellt ist. Die Vakuumkammer hat einen Boden 124 sowie eine Decke 123. Zwischen der Tür 120 und der Wand 121, der hinteren Wand 125, der vorderen Wand 126, sowie der Decke 123 ist eine Dichtung angeordnet, sodass die Vakuumkammer von der Umgebung gasdicht abgeschlossen ist, wenn die Tür 120 geschlossen ist. Diese Dichtung kann beispielsweise wie in der EP 2881688 A1 ausgebildet sein.
Die Produktkammer 107 hat einen Kammerboden 130. Der Kammerboden 130 überdeckt die gesamte Bodenfläche der Produktkammer 107. Der Kammerboden 130 enthält Öffnungen oder Ausnehmungen 131, durch welche der in der Produktkammer während der Vakuumkühlung entstehende Dampf in den Dampfkondensator 104 geleitet wird. Diese Öffnungen 131 sind in der vorliegenden Darstellung nur schematisch dargestellt.

Während des Vakuumkühlprozesses wird Kühlmittel, beispielsweise Frischwasser, welches Leitungswasser aus dem Wasserversorgungssystem sein kann, über die Kühlmittelzufuhrleitung 112 in den Dampfkondensator 104 eingebracht. In dem Einlassstutzen 154 ist eine Kühlmittelverteilvorrichtung 156 angeordnet, mittels welcher ein Sprühnebel erzeugt werden kann, der im Bodenbereich der Vakuumkammer 102 als Sprühkondensator und Wasserfilter wirkt, sodass der Bodenbereich den Dampfkondensator 104 ausbildet. Der Bodenbereich der Vakuumkammer 102 ist durch einen Kammerboden 130 von der Produktkammer 107 getrennt. Der Kammerboden 130 enthält mindestens eine Öffnung 131, durch welche eine von der Produktkammer 107 herkommende, mit Dampf angereicherte Abluft in den Dampfkondensator 104 eingeleitet werden kann. Das Kühlmittel nimmt den Dampf aus der Abluft auf, wobei dieser Dampf im Kühlmittel kondensiert wird. Das Kühlmittel ist insbesondere als Sprühnebel im Dampfkondensator 104 verteilt. Die Kühlmittelverteilvorrichtung 156 enthält hierzu erfindungsgemäß mindestens eine Sprühvorrichtung. Das mit Kondensat beladene Kühlmittel schlägt sich an den Innenwänden des Dampfkondensators 104 nieder, welche eine durch den Boden 124 gebildete Wanne 111 ausbilden. Das mit Kondensat beladene Kühlmittel läuft über den geneigten Boden 124 in einen Behälter 110, der als geschlossener Kondensatbehälter ausgebildet ist. Der Behälter 110 kann auch als Abscheidebehälter ausgebildet sein oder einen Abscheidebehälter enthalten. Am tiefsten Punkt des Bodens 124 des Dampfkondensators 104 bzw. der Vakuumkammer 102 befindet sich ein Ablassstutzen 155. An den Ablassstutzen 155 schliesst eine Verbindungsleitung 150 an. Die Verbindungsleitung 150 verbindet den Dampfkondensator 104 mit dem Behälter 110, wobei in der Verbindungsleitung ein Kühlmittelablassventil 115 angeordnet ist.
Der Behälter 110 weist ein Belüftungsventil 142, ein Ventil 153, sowie eine Absperrvorrichtung 116 auf. Das Kondensat kann den Behälter 110 über die Absperrvorrichtung 116 verlassen, wenn die Absperrvorrichtung 116 geöffnet ist.
Während des Vakuumkühlvorgangs ist das Kühlmittelablassventil 115 offen, das Belüftungsventil 142 für den Behälter 110 geschlossen. Das Ventil 153 zur Evakuierung des Behälters 110 ist geöffnet. Die dampfarme Abluft wird aus dem Behälter 110 entfernt. Stromabwärts des Ventils 153 kann eine Abscheidekammer 128 vorgesehen sein. Die Evakuierung des Behälters 110 erfolgt über die Vakuumpumpe 103. Am Ende des Vakuumkühlvorgangs wird das Kühlmittelablassventil 115 geschlossen und das Belüftungsventil 118 geöffnet, sodass der Druck in der Produktkammer 107 wieder auf den Umgebungsdruck ansteigen kann. Die Tür 120 zur Produktkammer 107 kann geöffnet werden und das vakuumgekühlte Produkt aus der Produktkammer 107 entnommen werden. Wenn die Befüllung des Behälters 110 am Ende eines oder mehrerer Vakuumkühlvorgänge abgeschlossen ist, wird das Kühlmittelablassventil 115 geschlossen. Dann wird die Vakuumpumpe 103 abgestellt oder zumindest das Ventil 153 geschlossen. Wenn das Belüftungsventil 142 geöffnet ist, kann Atmosphärendruck im Behälter 110 hergestellt werden. Dann wird die Absperrvorrichtung 116 geöffnet, um das mit Kondensat beladene Kühlmittel zu entleeren. Sobald der Behälter 110 entleert ist, das heisst, sämtliches mit Kondensat beladenes Kühlmittel daraus entfernt ist, sowie gegebenenfalls darin befindliche Verunreinigungen durch Reinigung entfernt sind, schliessen das Belüftungsventil 142 und die Absperrvorrichtung 116. Verunreinigungen in Form von Feststoffen können beispielsweise über ein Siebelement entfernt werden.

Wenn ein weiterer Vakuumkühlvorgang durchgeführt werden soll, wird das Kühlmittelablassventil 115, sowie das Ventil 153 zur Evakuierung des Behälters 110 geöffnet, welches direkt mit der Vakuumpumpe 103 verbunden ist. Somit kann der Behälter 110 auf einen Druck evakuiert werden, der dem Innendruck in der Produktkammer 107 bis auf die Druckverluste durch den Kammerboden 130 sowie der Verbindungsleitung 150 zu jedem Zeitpunkt entspricht. Spätestens zu diesem Zeitpunkt kann das Kühlmittelablassventil 115 geöffnet werden und das bereits im Dampfkondensator 104 befindliche mit Kondensat beladene Kühlmittel in den Behälter 110 eingeleitet werden. Ein weiterer Vorteil dieses Ausführungsbeispiels liegt darin begründet, dass für den Behälter 110 keine separate Vakuumpumpe benötigt wird.

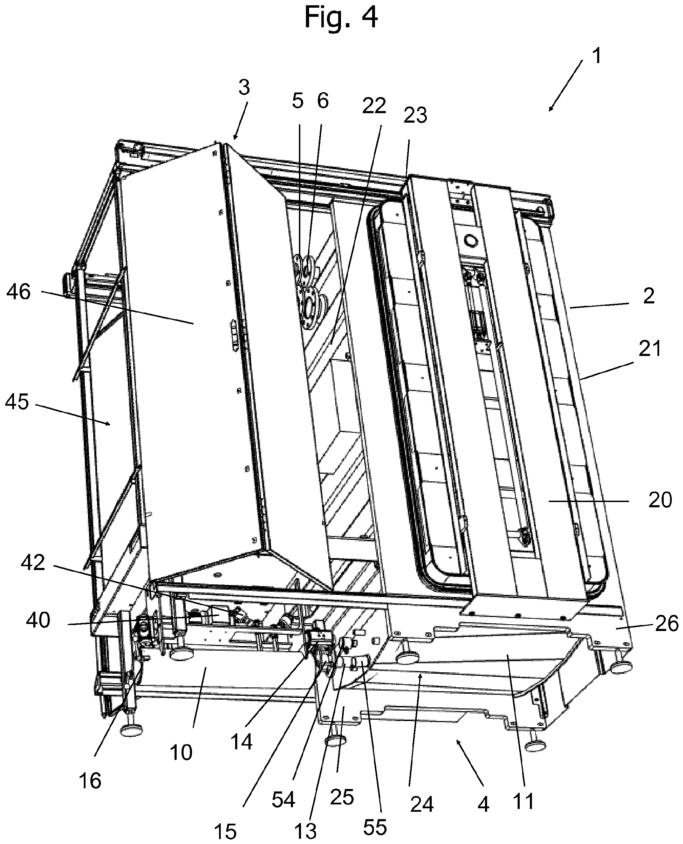

Fig. 4 zeigt eine Ansicht einer Vakuumkühlvorrichtung 1 nach einem der vorhergehenden Ausführungsbeispiele in einer Ansicht von unten. Die Vakuumkammer 2 ist durch eine Tür 20 verschlossen, sodass der Innenraum der Vakuumkammer nicht sichtbar ist. Neben der Vakuumkammer ist ein eine Kammer 45 angeordnet, welche die Vakuumpumpe 3 beinhaltet, die in der vorliegenden Darstellung nicht sichtbar ist. Die Vakuumpumpe 3 kann beispielsweise als Schraubenspindelpumpe ausgebildet sein. Die Kammer 45 ist im vorliegenden Ausführungsbeispiel durch eine Tür 46 verschliessbar, um die Vakuumpumpe 3 vor Verunreinigungen zu schützen, um die Personensicherheit zu gewährleisten sowie als Lärmschutz. Fig. 4 zeigt auch die Unterseite der Wanne 11, welche den Boden 24 der Vakuumkammer ausbildet. Die Wanne 11 weist eine Neigung auf, die bewirkt, dass das in der Wanne befindliche mit Kondensat beladene Kühlmittel in Richtung des Ablassstutzens 55 geleitet wird. Gemäss der vorliegenden Darstellung weist die Wanne 11 mehrere ebene Wannenabschnitte auf. Der Neigungswinkel der Wannenabschnitte gegen die Horizontalebene nimmt in Richtung der vorderen Wand 26 sowie in Richtung der hinteren Wand 25 zu.

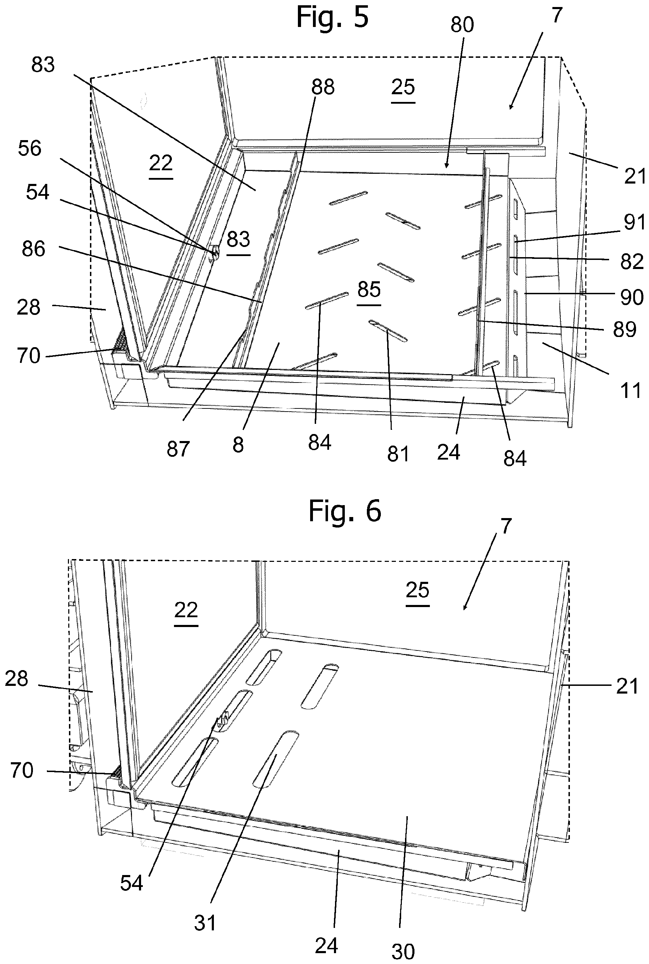

Fig. 5 zeigt ein Detail eines Zwischenbodens 8 nach dem Ausführungsbeispiel gemäss Fig. 4. Der Kammerboden 30 ist in Fig. 5 entfernt, um die Sicht auf den Zwischenboden 8 freizugeben. Das Kühlmittel wird in den Zwischenraum 80 zwischen Kammerboden 30 und Zwischenboden 8 über den Einlassstutzen 54 zugeführt, der eine Kühlmittelverteilvorrichtung 56 enthält. Mittels der Kühlmittelverteilvorrichtung 56 wird das Kühlmittel über die gesamte Oberfläche des Zwischenbodens 8 verteilt. Ein quer zur Strömungsrichtung des Kühlmittels angeordnetes erstes Stromstörelement 86 bildet ein wehrartiges Hindernis für die Kühlmittelströmung aus. Das Kühlmittel wird somit durch das Stromstörelement 86 umgelenkt. Nicht nur eine Umlenkung der Kühlmittelströmung, sondern auch eine Rückströmung kann in dem Zwischenbodenabschnitt 83 entstehen. Hierdurch kommt es zu einem Kontakt zwischen dem Kühlmittel und dem dampfbeladenen Abluftstrom. Bereits im Zwischenbodenabschnitt 83 kann ein Wesentlicher Anteil des Dampfes der Abluft kondensieren und bildet einen teilweise mit Kondensat beladenen Kühlmittelstrom aus. Der Kühlmittelstrom verlässt den Zwischenbodenabschnitt 83 über Ausnehmungen 87, die im Stromstörelement 86 angebracht sind. In der vorliegenden Darstellung stellen die Ausnehmungen 87 Bereiche geringerer Höhe des Zwischenbodenabschnitts 83 dar. Die untere Kante 88 des Stromstörelements 86 verläuft im Wesentlichen parallel zur Oberfläche des Zwischenbodens 8. Die untere Kante 88 des Stromstörelements 86 weist vorzugsweise einen Abstand zur Oberfläche des Zwischenbodens 8 auf. Auf der Oberfläche des Zwischenbodens 8 bildet sich ein Flüssigkeitsfilm aus, der aus mit Kondensat beladenem Kühlmittel besteht. Dieser Flüssigkeitsfilm soll ungehindert über den Zwischenboden 8 in Richtung des zweiten Zwischenbodenabschnitts 85 fliessen können. Der zweite Zwischenbodenabschnitt 85 wird einlassseitig vom Stromstörelement 86 begrenzt und auslassseitig von einem weiteren Stromstörelement 89. Die obere Kantenfläche des Stromstörelements 89 ist durch eine horizontal verlaufende ebene Fläche ausgebildet. Sie kann an die Unterseite des Kammerbodens 30 anschliessen. Der Kammerboden 30 kann auf der oberen Kantenfläche des Stromstörelements 89 aufliegen. Hierdurch wird der gesamte Abluftstrom mit Ausnahme von geringen Anteilen, die durch die Öffnungen 81, 84 entweichen können, durch den Schlitz zwischen unterer Kante des Stromstörelements 89 und der Oberfläche des Zwischenbodens 8 geleitet. Hierdurch wird die Abluft wiederum in intensiven Kontakt mit dem teilweise mit Kondensat beladenen Kühlmittelstrom gebracht, sodass weitere Dampfanteile im Kühlmittel kondensieren können. Der mit Kondensat beladene Kühlmittelstrom wird stromabwärts des Stromstörelements 89 über ein Ablaufelement 90 geleitet. Das Ablaufelement 90 schliesst an die abströmseitige Kante 82 des Zwischenbodens 8 an und ist in einem Winkel zur Oberfläche des Zwischenbodens 8 geneigt. Der Neigungswinkel kann vorteilhafterweise im Bereich von 60° bis einschliesslich 90° liegen, sodass eine wasserfallartige Strömung des mit Kondensat beladenen Kühlmittels in die Wanne 11 erfolgen kann. Auch ein Grossteil des dampfarmen Abluftstroms oder der gesamte dampfarme Abluftstrom wird über das Ablaufelement 90 geleitet.
Die Öffnungen 81 unterscheiden sich von den Öffnungen 84 im vorliegenden Ausführungsbeispiel durch den Winkel, den sie mit der Hauptströmungsrichtung des Kühlmittels einschliessen. Der Winkel der Öffnung 81 kann insbesondere den gleichen Betrag wie der Winkel der Öffnung 84 aufweisen, aber unterschiedliches Vorzeichen, das heisst, einer der Winkel hat in Bezug auf die Hauptströmungsrichtung negatives Vorzeichen, der andere positives Vorzeichen, bzw. einer der Winkel wird gegen den Uhrzeigersinn, der andere im Uhrzeigersinn gemessen. Die Öffnungen 81, 84 können jeweils die gleiche Form aufweisen, es könnten aber nach einem nicht dargestellten Ausführungsbeispiele Öffnungen unterschiedlicher Formen und/oder unterschiedlicher Winkelausrichtungen vorgesehen sein. Auch das Ablaufelement 90 kann eine Mehrzahl von Öffnungen 91 aufweisen. Diese Öffnungen 91 haben den Vorteil, dass der Strom der dampfarmen Abluft vom Strom des mit Kondensat beladenen Kühlmittels zumindest teilweise getrennt werden kann.

Fig. 6 zeigt ein Detail eines Kammerbodens 30 nach dem Ausführungsbeispiel gemäss Fig. 4. Der Kammerboden 30 enthält eine erste Reihe von Öffnungen 31 sowie eine zweite Reihe von Öffnungen 31. Durch diese Öffnungen kann die dampfbeladene Abluft in den Zwischenraum 80 zwischen dem Kammerboden 30 und dem Zwischenboden 8 eintreten. In der wandnäheren ersten Reihe von Öffnungen 31 können mehr Öffnungen 31 vorgesehen sein als in der zweiten Reihe. Die wandnähere erste Reihe von Öffnungen 31 wird üblicherweise nicht durch Stikkenwagen oder andere Gestellelemente verstellt, sodass der Abluftstrom im Wesentlichen ungehindert in den Zwischenraum 80 gelangen kann.

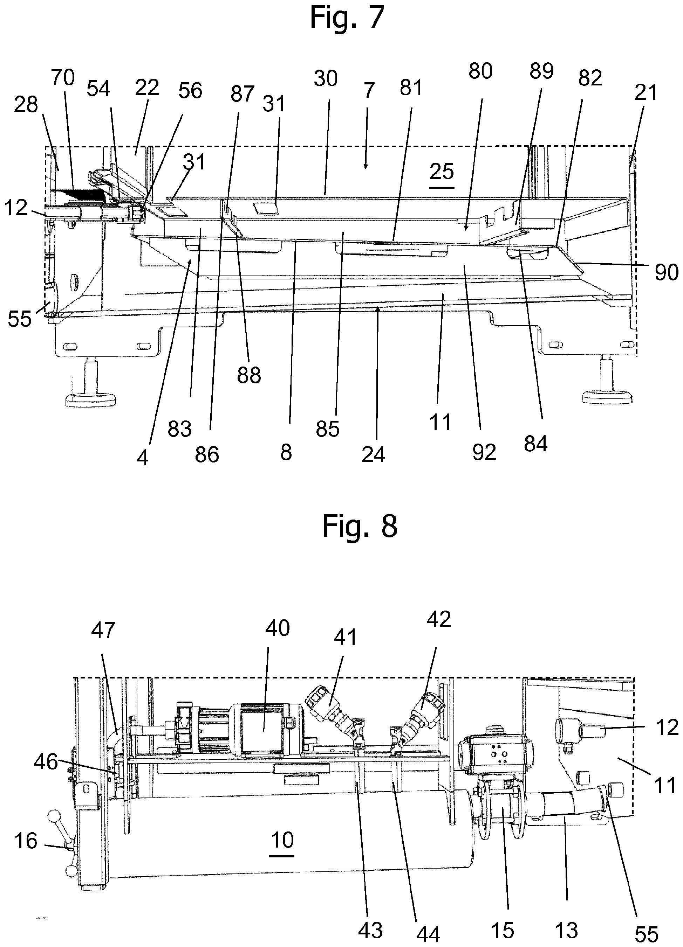

Fig. 7 zeigt den Dampfkondensator 4 der Vakuumkammer 2 gemäss des in Fig. 4 dargestellten Ausführungsbeispiels in einer Schnittdarstellung. Der Schnitt verläuft parallel zur hinteren Wand 25 im Wesentlichen entlang einer Mittenebene, sodass der hintere Teil des Dampfkondensators 4 sichtbar ist. Insbesondere zeigt die Fig. 7 einen Schnitt durch den Zwischenraum 80, der sich zwischen dem Kammerboden 30 und dem Zwischenboden 8 erstreckt. In diesem Zwischenraum 80 kommt die dampfbeladene Abluft mit dem Kühlmittel in Kontakt. Das Kühlmittel fliesst von der Kühlmittelzufuhrleitung 12 durch den Eintrittsstutzen 54 in die Kühlmittelverteilvorrichtung 56. Die Kühlmittelverteilvorrichtung 56 verteilt das Kühlmittel im ersten Zwischenbodenabschnitt 83, wie in Zusammenhang mit Fig. 6 beschrieben. In Fig. 7 ist auch gezeigt, dass sowohl das Stromstörelement 86, welches die auslassseitige Begrenzung des ersten Zwischenbodenabschnitts 83 bildet, als auch das Stromstörelement 89, welches die auslassseitige Begrenzung des zweiten Zwischenbodenabschnitts 85 bildet, in einem Abstand zum Zwischenboden 8 angeordnet sind. Hierdurch ist gewährleistet, dass das mit Kondensat teilweise beladene Kühlmittel ungehindert in Richtung der Kante 82 strömen kann.
In Fig. 7 ist auch gezeigt, dass der Zwischenboden 8 auf seiner Unterseite durch eine Mehrzahl von Streben 92 verstärkt ist. In Fig. 7 ist auch sichtbar, dass der Zwischenboden relativ zum Kammerboden 30 geneigt ist, um das Abströmen des teilweise mit Kondensat beladenen Kühlmittels zu begünstigen. Dementsprechend weist das Stromstörelement 89 eine grössere Höhe als das Stromstörelement 86 auf.
Jedes der Stromstörelemente 86, 89 kann an seinem unteren Ende eine Umlenkung aufweisen, wodurch ein Strömungskanal für das teilweise mit Kondensat beladene Kühlmittel gebildet wird.
Sowohl der erste Zwischenbodenabschnitt 83 als auch der zweite Zwischenbodenabschnitt 85 werden über eine Mehrzahl von Öffnungen 31, die im Kammerboden 30 angeordnet sind, mit dampfbeladener Abluft versorgt. Die dampfbeladene Abluft strömt parallel zum Kühlmittel, sodass der Dampf vom Kühlmittel aufgenommen wird. Wenn das Kühlmittel das Ablaufelement 90 erreicht, bildet es das teilweise mit Kondensat beladene Kühlmittel aus. Dieses teilweise mit Kondensat beladene Kühlmittel wird durch die Wand 21 umgelenkt und strömt unterhalb des Zwischenbodens 8 in Richtung des Ablassstutzens 55, wobei die Hauptströmungsrichtung im Wesentlichen entgegen der Hauptströmungsrichtung am Zwischenboden ist. Auf dem Weg durch die Wanne 11 passiert die Abluft sowie das teilweise mit Kondensat beladene Kühlmittel die Öffnungen 81 bzw. 84. Durch diese Öffnungen fliesst teilweise mit Kondensat beladenes Kühlmittel in die Wanne 11 und nimmt weiteren Dampf aus der Abluft auf, sodass ein mit Kondensat beladenes Kühlmittel erhalten wird. Die dampfarme Abluft verlässt den Dampfkondensator 4 durch den Trennboden 70 und gelangt in die Abscheidekammer 28. Das mit Kondensat beladene Kühlmittel verlässt die Wanne 11 durch den Ablassstutzen 55.

Fig. 8 zeigt ein Detail einer Anordnung zur Aufnahme des mit Kondensat beladenen Kühlmittels gemäss des in Fig. 4 gezeigten Ausführungsbeispiels. Das mit Kondensat beladene Kühlmittel gelangt vom Ablassstutzen 55 in die Kühlmittelablassleitung 13. In der Kühlmittelablassleitung ist ein Kühlmittelablassventil 15 angeordnet, welches bei Vakuumbetrieb geöffnet ist, sodass das mit Kondensat beladene Kühlmittel ungehindert in den Behälter 10 strömen kann. Im Behälter 10 wird das mit Kondensat beladene Kühlmittel gesammelt. Gegebenenfalls kann der Behälter 10 eine Abscheidevorrichtung enthalten, um insbesondere Feststoffe vom mit Kondensat beladenen Kühlmittel abzuscheiden. Je nach spezifischem Gewicht der Feststoffe kann ein Absetzbecken vorgesehen sein, in welchem sich die Feststoffe ansammeln. Wenn das Vakuumkühlverfahren beendet ist, wird das Kühlmittelablassventil 15 geschlossen, sobald kein mit Kondensat beladenes Kühlmittel mehr durch die Kühlmittelablassleitung 13 strömt.

Dann kann der Innenraum des Behälters 10 auf Normaldruck gebracht werden, indem das Belüftungsventil 42 geöffnet wird. Durch die Belüftungsleitung 44 strömt Luft in den Behälter 10. Wenn der Behälterinnenraum einen dem Umgebungsdruck entsprechenden Druck aufweist, kann das Ventil 46 geöffnet werden und das mit Kondensat beladene Kühlmittel dem Behälter 10 entnommen werden. Gegebenenfalls kann auch eine im Behälter 10 angeordnete Abscheidevorrichtung durch die von der Absperrvorrichtung 16 freigegebene Auslassöffnung herausgenommen werden, um die Feststoffe separat zu entsorgen oder den Behälter 10 zu reinigen. Die Absperrvorrichtung 16 verschliesst daher die Auslassöffnung des Behälters, deren Grösse dem Innendurchmesser des Behälters 10 entspricht. Aufgrund der Grösse der Auslassöffnung kann der Behälter nach jeder Entleerung vollständig gereinigt werden, sodass jegliche Keimbildung im Behälter vermieden werden kann.
Gegebenenfalls kann dem Behälter 10 Spülflüssigkeit über eine Spülleitung 43 zugeführt werden. Hierzu kann ein Spülventil 41 vorgesehen sein, welches öffnet, wenn der Behälter 10 ausgespült werden soll. Bei der Spülflüssigkeit kann es sich insbesondere um Wasser aus dem in Fig. 1 schematisch dargestellten Kühlmittelreservoir 60 handeln.
Der entleerte und gereinigte Behälter 10 kann wiederum für die nächste Vakuumkühlung mittels einer Pumpe 40evakuiert werden. Die Pumpe 40 ist über das Ventil 46 und die Fluidleitung 47 mit dem Behälter 10 verbunden. Das Ventil 46 ist normalerweise geschlossen, ausser für die Entleerung des Behälters 10 und/oder dessen Reinigung.
Sobald der Innenraum des Behälters 10 einen dem Druck in der Vakuumkammer 2 entsprechenden Unterdruck aufweist, kann mit Beginn des Vakuumkühlvorgangs das Kühlmittelablassventil 15 geöffnet werden, sodass der Behälter 10 wieder zur Aufnahme von mit Kondensat beladenem Kühlmittel bereit ist. Gemäss einer nicht dargestellten Variante kann der Behälter 10 auch während des Ablaufs einer Vakuumkühlung entleert werden.

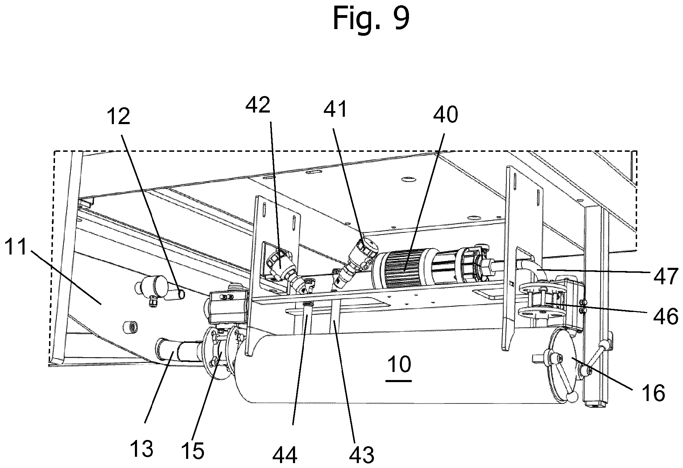

Fig. 9 zeigt ein Detail der Anordnung gemäss Fig. 8 von der Rückseite. In dieser Darstellung ist die Absperrvorrichtung 16 besser sichtbar, sowie das Ventil 46 und die Fluidleitung 47, die zur Pumpe 40 führt.
In Fig. 9 ist auch das Ende der Kühlmittelzufuhrleitung 12 zum Dampfkondensator 4 gezeigt. Die Kühlmittelzufuhrleitung 12 selbst sowie die Verbindung zum Kühlmittelreservoir 60 sind der Übersichtlichkeit halber in dieser Darstellung, sowie auch in den vorhergehenden Figuren weggelassen. Die Kühlmittelzufuhrleitung 12 kann beispielsweise als Rohr oder als Druckschlauch ausgebildet sein. Auch der weitere Verlauf der Belüftungsleitung 44 sowie der Spülleitung 43 ist der Einfachheit halber weggelassen.

Dieser Verfahrensablauf kann für jedes der vorhergehenden Ausführungsbeispiele bis zu dreimal während der Herstellung eines Produkts durchlaufen werden bevor der Behälter 10, 110 entleert werden muss. Das heisst, der Behälter 10, 110 hat ein Fassungsvermögen für mit Kondensat beladenem Kühlmittel, welches dem durchschnittlichen Kühlmittelbedarf sowie dem durchschnittlich anfallenden Kondensat von drei Arbeitszyklen entspricht. Unter einem Arbeitszyklus wird dabei die Durchführung eines Vakuumkühlverfahrens in der Vakuumkühlvorrichtung 1, 101 zur Herstellung eines Produkts oder einer Produktgruppe verstanden. Hierdurch kann die Ansammlung von Kühlmittel in der Vakuumkammer 2, 102 vermieden werden, sodass eine Kühlung des Kondensats in der Vakuumkammer 2, 102 nicht erforderlich ist. Es hat sich in der Praxis gezeigt, dass viele Bäckereien können die über eine Kühlung des Kondensats ins System zurückgeführte Wärmeenergie nicht gebrauchen können. Daher kann durch Verzicht auf die Kühlung des mit Kondensat beladenen Kühlmittels im Dampfkondensator auf die Erzeugung nicht abführbarer Wärme verzichtet werden, indem das Kühlmittel zwar im Dampfkondensator 4, 104 geringfügig erwärmt wird, da es die Wärme des kondensierenden Dampfs aufnimmt. Die Temperatur des Kühlmittels im Behälter 10, 110 erhöht sich allerdings so geringfügig, dass dieses Kühlmittel, gegebenenfalls nach Abscheidung von Verunreinigungen in der Abscheidekammer, in den Abwasserkreislauf direkt eingespeist werden kann. Der im Dampfkondensator 4, 104 erforderliche Wärmetauscher wird somit in keinem der Ausführungsbeispiele mehr benötigt.

Des Weiteren kann alternativ zu den vorhergehenden Ausführungsbeispielen oder in Ergänzung hierzu ein Kühlelement an der Aussenseite der Wanne 11, 111 vorgesehen sein, welches beispielsweise einen Kühlmantel oder berippte Rohrelemente umfasst. Berippte Rohrelemente können auch im Innenraum der Wanne vorgesehen sein. Diese berippten Rohrelemente befinden sich vorzugsweise unterhalb des Zwischenbodens 8 und sind durch den Zwischenboden 8 vor Beschädigung geschützt. Der Zwischenboden 8 wird nur zu Montagezwecken, zur Reinigung oder für Instandhaltungsarbeiten entfernt.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Vakuumkühlvorrichtung (1, 101) zur Kühlung von Lebensmitteln, insbesondere heissen Backwaren, umfassend eine Vakuumkammer (2, 102), die eine Produktkammer (7, 107) zur Aufnahme des Lebensmittels für dessen Kühlung und einen Behälter (10, 110) enthält, eine Vakuumquelle (3, 103), die mit der Produktkammer (7, 107) verbunden ist und einen Dampfkondensator (4, 104) zur Kondensation von in der Produktkammer (7, 107) während des Abkühlvorgangs entstehender dampfbeladener Abluft, wobei der Dampfkondensator (4, 104) unterhalb der Produktammer (7, 107) angeordnet ist, wobei der Dampfkondensator im Betriebszustand ein Kühlmittel enthalten kann, wobei der Dampfkondensator (4, 104) eine Kühlmittelverteilvorrichtung (56, 156) zur Verteilung des Kühlmittels im Dampfkondensator (4, 104) enthält, wobei die Produktkammer (7, 107) mindestens eine Öffnung (31, 131) zur Einleitung der dampfbeladenen Abluft in das Kühlmittel enthält, **dadurch gekennzeichnet, dass** die Kühlmittelverteilvorrichtung (56, 156) als Sprühvorrichtung ausgebildet ist.

2. Vakuumkühlvorrichtung (1, 101) nach Anspruch 1, wobei der Behälter (10, 110) über ein fluidleitendes Verbindungselement (11,13, 15, 55, 150) mit dem Dampfkondensator (4, 104) in Verbindung steht.

3. Vakuumkühlvorrichtung (1, 101) nach Anspruch 2, wobei das fluidleitende Verbindungselement eine Wanne (11), einen Ablassstutzen (55), eine Kühlmittelablassleitung (13) sowie ein Kühlmittelablassventil (15) enthält oder als Verbindungsleitung (150) ausgebildet ist, die ein Kühlmittelablassventil (115) enthält.

4. Vakuumkühlvorrichtung (1, 101) nach einem der vorhergehenden Ansprüche, wobei der Behälter (10, 110) eine Abscheidekammer (28, 128) umfasst.

5. Vakuumkühlvorrichtung (1, 101) nach einem der vorhergehenden Ansprüche, wobei eine Abscheidekammer (28, 128) stromabwärts des Dampfkondensators (4, 104) zur Aufnahme der dampfarmen Abluft angeordnet ist.

6. Vorrichtung (1, 101) nach einem der vorhergehenden Ansprüche, wobei der Behälter (10, 110) eine Absperrvorrichtung (16) enthält.

7. Verfahren zur Vakuumkühlung eines Lebensmittels umfassend die Schritte des Befüllens einer Produktkammer (7, 107) einer Vakuumkühlvorrichtung (1, 101) mit einem Lebensmittel, Schliessen der Produktkammer (7, 107), Betätigen einer Vakuumquelle (3, 103) zur Erzeugung eines negativen Drucks, wobei in der Produktkammer (7, 107) durch das Abkühlen des Lebensmittels eine dampfbeladene Abluft erzeugt wird, wobei die dampfbeladene Abluft in einen Dampfkondensator (4, 104) eingeleitet wird, wobei der Dampfkondensator (4, 104) mit der Produktkammer (7, 107) in fluidleitender Verbindung steht, wobei die Produktkammer (7, 107) mindestens eine Öffnung (31, 131) zur Einleitung der dampfbeladenen Abluft in das Kühlmittel enthält, wobei ein Kühlmittel mittels einer Kühlmittelverteilvorrichtung (56, 156) in den Dampfkondensator (4, 104) verteilt wird, sodass ein Anteil des Dampfes im Kühlmittel kondensiert wird, sodass ein mit Kondensat beladenes Kühlmittel erhalten wird, **dadurch gekennzeichnet dass**, das Kühlmittel mittels der Kühlmittelverteilvorrichtung (56, 156) in den Dampfkondensator (4, 104) gesprüht wird, wobei die dampfbeladene Abluft in das eingesprühte Kühlmittel eingeleitet wird.

8. Verfahren nach Anspruch 7, wobei der Anteil des kondensierten Dampfes im Kühlmittel mindestens 75 Volums% des in der dampfbeladenen Abluft befindlichen Dampfes umfasst.

9. Verfahren zur Vakuumkühlung eines Lebensmittels nach einem der Ansprüche 7 oder 8, wobei das mit Kondensat beladene Kühlmittel in einem Behälter (10, 110) aufgenommen wird, wobei der Behälter (10, 110) ein Ventil (46, 146) aufweist, um das mit Kondensat beladene Kühlmittel aus dem Behälter (10, 110) abzulassen, wobei nach dem Entleeren des Behälters das Ventil (46, 146) geschlossen wird.

10. Verfahren zur Vakuumkühlung eines Lebensmittels nach einem der Ansprüche 7 bis 9, wobei die Produktkammer (7, 107) einen Kammerboden (30, 130) aufweist, welcher die Öffnung (31, 131) enthält, durch welche die dampfbeladene Abluft in den Dampfkondensator (4, 104) eintritt.

11. Verfahren zur Vakuumkühlung eines Lebensmittels nach einem der Ansprüche 7 bis 10, wobei das mit Kondensat beladene Kühlmittel in einem Behälter (10, 110) aufgenommen wird, wobei der Behälter eine Absperrvorrichtung (16) enthält, wobei der Behälter (10, 110) gereinigt werden kann, wenn die Absperrvorrichtung (16) geöffnet ist.

## Claims

1. A vacuum cooling device (1, 101) for the cooling of foodstuff, in particular hot bakery products, comprises a vacuum chamber (2, 102), which contains a product chamber (7, 107) for receiving the foodstuff for its cooling and a container (10, 110), a vacuum source (3, 103), which is connected with the product chamber (7, 107) and a vapor condenser (4, 104) for condensation of vapor containing discharge air generated during the cooling process in the product chamber (7, 107), wherein the vapor condenser (4, 104) is arranged below the product chamber (7, 107), wherein the vapor condenser can contain a cooling medium, if the vacuum cooling device is in the operating state, wherein the vapor condenser (4, 104) comprises a cooling medium distribution device (56, 156) to distribute the cooling medium in the vapor condenser (4, 104), wherein the product chamber (7, 107) comprises at least an opening (31, 131) for supplying the vapor containing discharge air into the cooling medium **characterized in that** the cooling medium distribution device (56, 156) is configured as a spraying device.

2. The vacuum cooling device (1, 101) according to claim 1, wherein the container (10, 110) is in connection with the vapor condenser (4, 104) by a fluid conducting connection element (11,13, 15, 55, 150).

3. The vacuum cooling device (1, 101) according to claim 2, wherein the fluid conducting connection element comprises a basin (11), a discharge stub (55), a cooling medium discharge conduit (13) and a cooling medium discharge valve (15) or is configured as connecting conduit (150), which comprises a cooling medium discharge valve (115).

4. The vacuum cooling device (1, 101) according to one of the preceding claims, wherein the container (10, 110) comprises a separation chamber (28, 128).

5. The vacuum cooling device (1, 101) according to one of the preceding claims, wherein a separation chamber (28, 128) is arranged downstream of the vapor condenser (4, 104) for receiving the discharge air with low vapor content.

6. The vacuum cooling device (1, 101) according to one of the preceding claims, wherein the container (10, 110) comprises a closure device (16).

7. Method for the vacuum cooling of foodstuff, comprising the steps of supplying the product chamber (7, 107) of a vacuum cooling device (1, 101) with foodstuff, closing the product chamber (7, 107), activating a vacuum source (3, 103) for generating a negative pressure, wherein a vapor containing discharge air is produced in the product chamber (7, 107) by means of the cooling of the foodstuff, wherein the vapor containing discharge air is introduced into a vapor condenser (4, 104) wherein the vapor condenser (4, 104) is fluidly connected to the product chamber (7, 107) wherein the product chamber (7, 107) comprises at least one opening (31, 131) for introducing the vapor containing discharge air into the cooling medium, wherein the cooling medium is distributed by a cooling medium distribution device (56, 156) into the vapor condenser (4, 104) such that a portion of the vapor is condensed in the cooling medium, whereby a cooling medium containing a condensate is obtained, **characterized in that** the cooling medium is sprayed by the cooling medium distribution device (56, 156) into the vapor condenser (4, 104), wherein the vapor containing discharge air is introduced into the sprayed cooling medium.

8. Method according to claim 7, wherein the portion of condensed vapor in the cooling medium comprises at least 75 % in volume of the vapor contained in the vapor containing discharge air.

9. Method for the vacuum cooling of foodstuff according to one of claims 7 or 8, wherein the cooling medium containing the condensate is received in a container (10, 110), wherein the container (10, 110) comprises a valve (46, 146) to discharge the cooling medium containing the condensate from the container (10, 110), wherein the valve (46, 146) is closed after the container has been emptied.

10. Method for the vacuum cooling of foodstuff according to one of claims 7 to 9, wherein the product chamber (7, 107) comprises a chamber floor (30, 130), which contains the opening (31, 131), through which the vapor containing discharge air enters the vapor condenser (4, 104).

11. Method for the vacuum cooling of foodstuff according to one of claims 7 to 10, wherein the cooling medium containing the condensate is received in a container (10, 110), wherein the container (10, 110) comprises a closure device (16), such that the container (10, 110) can be cleaned if the closure device (16) is open.

## Revendications

1. Dispositif de refroidissement sous vide (1, 101) pour refroidir des produits alimentaires, en particulier des produits de boulangerie chauds, comprenant une chambre à vide (2, 102) contenant une chambre de produit (7, 107) pour recevoir les aliments pour leur réfrigération et un récipient (10, 110), une source de vide (3, 103) connectée à la chambre de produit (7, 107) et un condenseur de vapeur (4, 104) pour condenser l'air évacué chargé de vapeur sortant de la chambre de produit (7, 107) pendant le processus de refroidissement, le condenseur de vapeur (4, 104) étant arrangé sous la chambre de produit (7, 107), le condenseur de vapeur pouvant contenir un réfrigérant à l'état de fonctionnement, le condenseur à vapeur (4, 104) comportant un dispositif de distribution de réfrigérant (56, 156) pour répartir le réfrigérant dans le condenseur à vapeur (4, 104), en ce que la chambre de produit (7, 107) a au moins une ouverture (31, 131) pour introduire l'air évacué chargé de vapeur dans le réfrigérant, **caractérisé en ce que** le dispositif de distribution de réfrigérant (56, 156) est conçu comme un dispositif de pulvérisation.

2. Dispositif de refroidissement sous vide (1, 101) selon la revendication 1, dans lequel le récipient (10, 110) est en communication avec le condenseur de vapeur (4, 104) par un élément de connexion (11, 13, 15, 55, 150) conducteur de fluide.

3. Dispositif de refroidissement sous vide (1, 101) selon la revendication 2, dans lequel l'élément de connexion conducteur de fluide comprend un bac (11), une buse de décharge (55), une conduite de décharge de réfrigérant (13) et une soupape de décharge de réfrigérant (15) ou est configuré comme conduite de connexion (150) contenant une soupape de décharge de réfrigérant (115).

4. Dispositif de refroidissement sous vide (1, 101) selon l'une quelconque des revendications précédentes, dans lequel le récipient (10, 110) comprend une chambre de séparation (28, 128).

5. Dispositif de refroidissement sous vide (1, 101) selon l'une quelconque des revendications précédentes, dans lequel une chambre de séparation (28, 128) en aval du condenseur de vapeur (4, 104) est arrangée pour recevoir l'air d'échappement à faible teneur en vapeur.

6. Dispositif (1, 101) de refroidissement sous vide selon l'une quelconque des revendications précédentes, dans lequel le récipient (10, 110) comprend un dispositif d'obturation (16).

7. Procédé de refroidissement sous vide d'un produit alimentaire comprenant les étapes de remplir une chambre de produit (7, 107) d'un dispositif de refroidissement sous vide (1, 101) avec un aliment, fermer la chambre de produit (7, 107), actionner une source de vide (3, 103) pour produire une pression négative, dans laquelle, en ce qu' un air d'échappement chargé de vapeur est générée par le refroidissement de l'aliment dans la chambre de produit (7, 107), dans lequel l'air d'échappement chargé de vapeur est introduit dans un condenseur de vapeur (4, 104), en ce que le condenseur de vapeur (4, 104) est en connexion conducteur de fluide avec la chambre de produit (7, 107), dans laquelle la chambre de produit (7, 107) a au moins une ouverture (31, 131) pour introduire l'air évacué chargé de vapeur dans un réfrigérant, dans lequel le réfrigérant est distribué par un dispositif de distribution de réfrigérant (56, 156) dans le condenseur à vapeur (4, 104) ainsi qu'une partie de la vapeur est condensée dans le réfrigérant, de sorte qu'un réfrigérant chargé de condensat est obtenu, **caractérisé en ce que** le réfrigérant est pulvérisé dans le condenseur de vapeur (4, 104) au moyen du dispositif de distribution de réfrigérant (56, 156), **en ce que** l'air d'échappement chargé de vapeur étant introduit dans le réfrigérant pulvérisé.

8. Procédé de refroidissement sous vide d'un produit alimentaire selon la revendication 7, dans lequel la partie de la vapeur condensée dans le réfrigérant comprend au moins 75% en volume de la vapeur présente dans l'air d'échappement chargé de vapeur.

9. Procédé de refroidissement sous vide d'un produit alimentaire selon l'une quelconque des revendications 7 ou 8, dans lequel le réfrigérant chargé de condensat est reçu dans un récipient (10, 110), le récipient (10, 110) comportant une soupape (46, 146) pour drainer le réfrigérant chargé de condensat du récipient (10, 110), la soupape (46, 146) étant fermée après avoir vidé le récipient.

10. Procédé de refroidissement sous vide d'un produit alimentaire selon l'une quelconque des revendications 7 à 9, dans lequel la chambre de produit (7, 107) a un fond de chambre (30, 130) contenant l'ouverture (31, 131) à travers laquelle l'air chargé de vapeur entre dans le condenseur de vapeur (4, 104).

11. Procédé de refroidissement sous vide d'un produit alimentaire selon l'une quelconque des revendications 7 à 10, dans lequel le réfrigérant chargé de condensat est reçu dans un récipient (10, 110), le récipient comprenant un dispositif d'obturation (16), en ce que le récipient (10, 110) pouvant être nettoyé lorsque le dispositif d'obturation (16) est ouvert.
